# EUROPEAN PATENT APPLICATION

(11) **EP 4 513 453 A1**
(43) Date of publication of application: **26.02.2025**
(21) Application number: 23857636.7
(22) Date of filing: 16.08.2023
(51) Int. Cl.: G06V 30/148, G06V 30/16, G06V 30/18

(54) **METHOD AND SERVER FOR ACQUIRING TEXT FROM IMAGE**

(30) Priority: 26.08.2022 KR 20220107899; 16.01.2023 KR 20230006301
(71) Applicant: Samsung Electronics Co., Ltd., Suwon-si, Gyeonggi-do 16677 (KR)
(72) Inventor: KIM, Hyosang, Suwon-si, Gyeonggi-do 16677 (KR); KIM, Younguk, Suwon-si, Gyeonggi-do 16677 (KR); KIM, Yehoon, Suwon-si, Gyeonggi-do 16677 (KR); KIM, Jongyeong, Suwon-si, Gyeonggi-do 16677 (KR); KIM, Hyunhan, Suwon-si, Gyeonggi-do 16677 (KR); SEO, Chanwon, Suwon-si, Gyeonggi-do 16677 (KR); HYUN, Hyein, Suwon-si, Gyeonggi-do 16677 (KR)
(74) Representative: Gulde & Partner
(86) International application number: PCT/KR2023/012109
(87) International publication number: WO 2024/043602

(57) **Abstract**

A method performed by a server, of obtaining an image including a first text and a second text overlapping the first text; separating a first text region corresponding to the first text from the image; extracting pixels corresponding to the first text from the first text region to obtain an undamaged portion and a damaged portion of the first text; and reconstructing the first text by inpainting the damaged portion of the first text in which the first text overlaps the second text in the image.

## Description

### TECHNICAL FIELD

A server and an operation method for separating, extracting, and recognizing an overlapping text from an image by using a text separation network are provided.

### BACKGROUND ART

As there are various types of products, text is provided thereon for describing each product. For a product with text, the text is printed on a surface of the product, a label sticker, etc. Some commercially available product labels may be created using a method of additionally printing specific product information on a label template that has common product information preprinted thereon. In the process of printing such a label, overlapping text may exist due to errors (e.g., an error in printing coordinates, etc.). When the overlapping text is recognized by using a general text recognition method, a text recognition result may be inaccurate. When recognizing texts, algorithms for separating and accurately recognizing the overlapping text have been recently used.

### DESCRIPTION OF EMBODIMENTS

### TECHNICAL SOLUTION TO PROBLEM

According to an aspect of the disclosure, a method performed by a server, of obtaining a text from an image, may include: obtaining an image including a first text and a second text overlapping the first text; separating a first text region corresponding to the first text from the image; extracting pixels corresponding to the first text from the first text region to obtain an undamaged portion and a damaged portion of the first text; and reconstructing the first text by inpainting the damaged portion of the first text in which the first text overlaps the second text in the image

According to an aspect of the disclosure, a server for obtaining a text from an image may include: a memory storing one or more instructions; and one or more processors configured to execute the one or more instructions stored in the memory to obtain an image including a first text and a second text overlapping the first text, separate a first text region corresponding to the first text from the image, extract pixels corresponding the first text region to obtain an undamaged portion and a damaged portion of the first text, and reconstruct the first text by inpainting the damaged portion of the first text in which the first text overlaps the second text in the image

According to an aspect of the disclosure, a computer-readable recording medium may be provided having recorded thereon a program for executing any one of the methods, performed by a server, of obtaining text from an image, as described above and below.

### BRIEF DESCRIPTION OF DRAWINGS

FIG. 1 is a schematic diagram illustrating an operation in which a server extracts a text from an image, according to an embodiment of the disclosure.
FIG. 2 is a flowchart illustrating an operation in which a server obtains text from an image, according to an embodiment of the disclosure.
FIG. 3 is a diagram for describing an image including overlapping texts, which is obtained by a server, according to an embodiment of the disclosure.
FIG. 4 is a diagram for describing an operation in which a server preprocesses an image for text separation, according to an embodiment of the disclosure.
FIG. 5 is a diagram for describing a text separation network used by a server, according to an embodiment of the disclosure.
FIG. 6 is a diagram for describing an operation in which a server recognizes text in an image, according to an embodiment of the disclosure.
FIG. 7A is a diagram for describing an operation in which a server uses color information for text separation, according to an embodiment of the disclosure.
FIG. 7B is a diagram for describing an operation in which a server uses color information for text separation, according to an embodiment of the disclosure.
FIG. 8 is a diagram for describing an operation in which a server detects text regions in an image, according to an embodiment of the disclosure.
FIG. 9 is a diagram for describing an operation in which a server separates text regions from an image, according to an embodiment of the disclosure.
FIG. 10 is a diagram for describing an operation in which a server extracts a first text from a text region, according to an embodiment of the disclosure.
FIG. 11A is a diagram for describing an operation in which a server inpaints an image including a damaged text, according to an embodiment of the disclosure.
FIG. 11B is a diagram for describing an operation in which a server generates training data for an inpainter, according to an embodiment of the disclosure.
FIG. 12 is a diagram for describing a text separation network according to an embodiment of the disclosure.
FIG. 13A is a diagram for describing an example in which a server operates in conjunction with a refrigerator that is a home appliance, according to an embodiment of the disclosure.
FIG. 13B is a diagram for further describing an example in which a server operates in conjunction with a refrigerator that is a home appliance.
FIG. 13C is a diagram for describing an operation of a home appliance in conjunction with a server.
FIG. 14A is a diagram for describing an example in which a server operates in conjunction with an oven that is a home appliance, according to an embodiment of the disclosure.
FIG. 14B is a diagram for further describing an example in which a server operates in conjunction with an oven that is a home appliance.
FIG. 15 is a flowchart of an operation method of a server operating in conjunction with a home appliance, according to an embodiment of the disclosure.
FIG. 16 is a block diagram of a server according to an embodiment of the disclosure.
FIG. 17 is a block diagram of an electronic device according to an embodiment of the disclosure.
FIG. 18 is a block diagram of a refrigerator according to an embodiment of the disclosure.
FIG. 19 is a block diagram of an oven according to an embodiment of the disclosure.

### MODE OF DISCLOSURE

Throughout the disclosure, the expression "at least one of a, b or c" indicates only a, only b, only c, both a and b, both a and c, both b and c, all of a, b, and c, or variations thereof.

The terms used in the disclosure may be general terms currently widely used in the art based on functions described in the disclosure, but may be changed according to an intention of a technician engaged in the art, precedent cases, advent of new technologies, etc. Furthermore, some particular terms may be arbitrarily selected by the applicant, and in this case, the meaning of the selected terms will be described in detail in the detailed description of the disclosure. Thus, the terms used herein should be defined not by simple appellations thereof but based on the meaning of the terms together with the overall description of the disclosure.

Singular expressions used herein are intended to include plural expressions as well unless the context clearly indicates otherwise. All the terms used herein, which include technical or scientific terms, may have the same meaning that is generally understood by a person of ordinary skill in the art. Furthermore, although the terms including an ordinal number such as "first", "second", etc. may be used herein to describe various elements or components, these elements or components should not be limited by the terms. The terms are only used to distinguish one element or component from another element or component.

Throughout the specification, when a part "includes" or "comprises" an element, unless there is a particular description contrary thereto, it is understood that the part may further include other elements, not excluding the other elements. In addition, terms such as "portion", "module", etc., described in the specification refer to a unit for processing at least one function or operation and may be implemented as hardware or software, or a combination of hardware and software.

Embodiments of the disclosure will be described more fully hereinafter with reference to the accompanying drawings so that they may be easily implemented by one of ordinary skill in the art. However, embodiments of the disclosure may have different forms and should not be construed as being limited to the embodiments thereof set forth herein. Furthermore, parts not related to descriptions of the disclosure are omitted to clearly explain the disclosure in the drawings, and like reference numerals denote like elements throughout. In addition, reference numerals used in each drawing are only for describing each drawing, and different reference numerals used in different drawings are not intended to indicate different elements. Hereinafter, the disclosure will be described in detail with reference to the accompanying drawings.

In embodiment of the present disclosure, when an image includes overlapping texts, the overlapping texts may be separated via color clustering and/or neural networks, which use information of color channels and text attributes (e.g., text color, text shape, and text font). Additionally, any missing pixel information resulting from the text separation process may be recovered or reconstructed through inplanting.

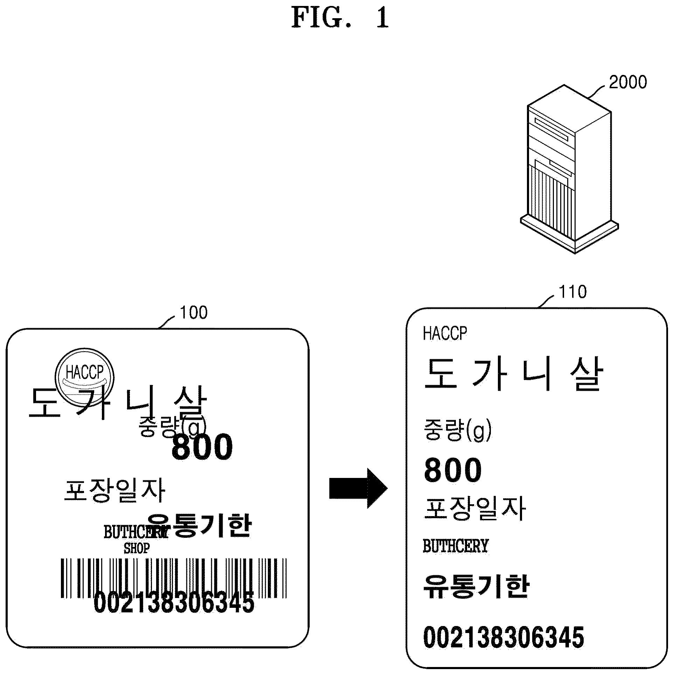

FIG. 1 is a schematic diagram illustrating an operation in which a server extracts a text from an image, according to an embodiment of the disclosure.

Referring to FIG. 1, a server 2000 according to an embodiment of the disclosure may obtain an image 100. In this case, the image 100 may include texts, and different texts may overlap each other within the image 100. For example, the image 100 obtained by the server 2000 may be a product label image. Here, a product label may be created by printing detailed product information on a basic product label template. As a result, a text (e.g., a product type) included in the product label template and a text (e.g., a product name) printed on the product label template may overlap each other. The product may be, for example, food (meat, etc.), wine, clothing, textile detergents, etc., but is not limited thereto.

The server 2000 may separate and extract overlapping texts from the image 100. The server 2000 may separate and extract the overlapping texts by using a text separation network to thereby respectively obtain unit text fragments 110, such as letters, words, corpora, sentences, etc. For example, when the image 100 is a product label image, the text fragments 110 represent pieces of information related to the product.

In an embodiment of the disclosure, the server 2000 may recognize text and generate information related to the product, based on the text fragments 110 separated from the image 100. The server 2000 may control a home appliance (e.g., a smart home appliance such as a refrigerator or an oven) by using the information related to the product, or provide the information related to the product to a user's electronic device (e.g., a user's smartphone).

Moreover, in the disclosure, the operations performed by the server 2000 may also be performed by a user's electronic device. The electronic device may be a device that captures an image (a still image and/or a video) through a camera and outputs the image on a display, and may receive an image from an external device (e.g., an image scanner). For example, the electronic device may include, but is not limited to, a smart TV, a smartphone, a tablet PC, a laptop PC, etc. The electronic device may be implemented as any one of various types and forms of electronic devices including cameras and displays. Also, the electronic device may include a speaker for outputting audio. The electronic device 3000may directly separate and extract a text from the image 100 obtained using a camera of the electronic device 3000, or transmit the image 100 to the server 2000 to allow the server 2000 to separate and extract a text from the image 100.

An example in which the server 2000 performs text separation and extraction operations is described in more detail below with reference to the accompanying drawings.

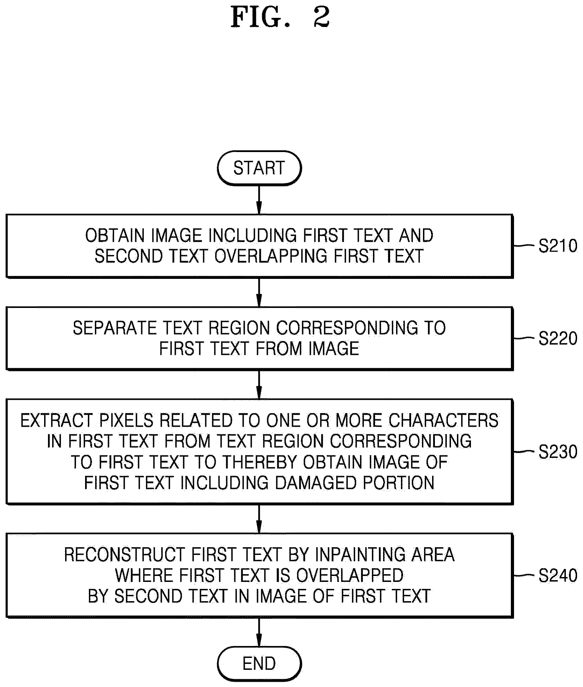

FIG. 2 is a flowchart illustrating an operation in which a server obtains text from an image, according to an embodiment of the disclosure.

In operation S210, the server 2000 obtains an image including a first text and a second text overlapping the first text.

For example, the server 2000 may receive an image from a user's electronic device (e.g., a smartphone, a PC, etc.). For example, the server 2000 may obtain an image stored in a memory within the server 2000.

The server 2000 may obtain an image including overlapping texts. In the disclosure, when there are overlapping texts in the image, a separated and extracted text is referred to as a first text, and another text overlapping the first text is referred to as a second text.

The distinction between the first text and the second text is for convenience of description, and any unit text among the overlapping texts may be the first text. For example, when text 'ABC' and text 'DEF' overlap each other, the first text may be determined to be 'ABC' and the second text to be 'DEF', and operations for text separation and extraction described below are performed to obtain the first text 'ABC' from among the overlapping texts. However, because the server 2000 separates/extracts all texts in the image, the same or similar operations are performed on all the texts in the image. In other words, in the same or similar manner, the server 2000 may identify the first text as 'DEF' and the second text as 'ABC' to thereby separate the first text 'DEF' among the overlapping texts.

There may be one or more second texts overlapping the first text. For example, when one unit text fragment overlapping the first text is referred to as second text-A, another unit text fragment overlapping the first text may be referred to as second text-B.

In operation S220, the server 2000 separates a text region(a first text region) corresponding to the first text from the image. In the disclosure, a software module used by the server 2000 to separate the text region corresponding to the first text is referred to as a separator.

The server 2000 may perform text segmentation by using the separator. The server 2000 may determine a plurality of text regions by segmenting texts in the image into a plurality of character groups. A text region refers to a region including characters classified in the same group in the image. The separator may include a first separator and a second separator. The first separator may perform relatively light text separation operations compared to the second separator, and the second separator may perform relatively heavy operations compared to the first separator. Therefore, the second separator may achieve higher text separation accuracy than the first separator.

In an embodiment of the disclosure, the server 2000 may obtain a text region map indicating locations of texts in the image and determine a plurality of text regions based on the text region map. The server 2000 may determine the plurality of text regions based on at least one of a language, a font, a corpus (e.g., weight (g)), or a logo of each text.

In an embodiment of the disclosure, the first separator may determine a plurality of text regions by applying a color clustering algorithm so that characters of adjacent colors are grouped.

In an embodiment of the disclosure, the second separator may be implemented as an artificial intelligence (AI) model. The separator may be a deep neural network model that receives, as an input, an original image including text and outputs an image including one unit of the text (e.g., a character group). The separator may be implemented using various known deep neural network architectures and algorithms or through modification of the various known deep neural network architectures and algorithms.

In an embodiment of the disclosure, when the server 2000 separates the text region corresponding to the first text, the separated text region includes the first text as well as the whole or a part of the second text overlapping the first text.

In operation S230, the server 2000 extracts pixels related to one or more characters in the first text from the text region corresponding to the first text to thereby obtain an image of the first text with a damaged portion. That is, the server 2000 extracts pixels corresponding to the first text from the text region of the first text, to obtain an undamaged prtion and a damaged portion of the first text. In the disclosure, a software module used by the server 2000 to extract pixels corresponding to characters in the first text is referred to as an extractor.

The server 2000 may label pixels corresponding to one or more characters in the first text in the text region separated in operation S220. For example, the server 2000 may label the pixels corresponding to the one or more characters in the first text with a label value of 1, and may not label pixels corresponding to characters in the second text that overlaps the first text. Alternatively, for example, the server 2000 may label the pixels corresponding to the one or more characters in the first text with a label value of 1 while labeling pixels corresponding to characters in the second text overlapping the first text with a label value 2.

The server 2000 may obtain an image of the first text by extracting pixels corresponding to characters in the first text from the text region. In this case, because the server 2000 does not extract pixels corresponding to characters in the second text overlapping the first text, some of the pixels corresponding to the characters in the first text may be damaged.

In operation S240, the server 2000 reconstructs the first text by inpainting an area where the first text is overlapped by the second text in the image of the first text. That is, the server 2000 inpaints the damaged portion of the first text in which the first text overlaps the second text in the image. In the disclosure, a software module used by the server 2000 to reconstruct damaged pixels for characters in the first text is referred to as an inpainter.

In an embodiment of the disclosure, the inpainter for reconstructing damaged pixels may be implemented as an Al model. The inpainter may be a deep neural network model that receives, as an input, an image including damaged pixels and outputs an image with the damaged pixels filled in. The inpainter may be implemented using various known deep neural network architectures and algorithms, or through modification of the various known deep neural network architectures and algorithms.

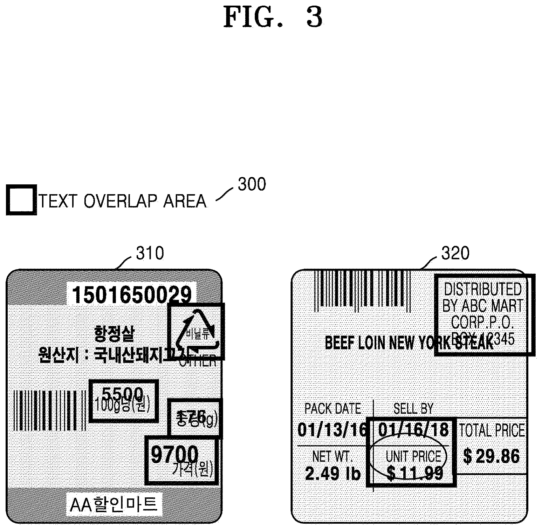

**Hereinafter,** an image including overlapping texts is described with reference to FIG. 3.

FIG. 3 is a diagram for describing an image including overlapping texts, which is obtained by a server, according to an embodiment of the disclosure.

In an embodiment of the disclosure, an image including overlapping texts, which is obtained by the server 2000, may be a product label image. Referring to FIG. 3, a first image 310 containing Korean texts and a second image 320 containing English texts are shown as an example.

The first image 310 is an example of a product label image containing Korean texts. The first image 310 may show a product label template in which texts representing detailed information of a product are printed on it. The first image 310 is a product label image including a plurality of text overlap areas 300. For example, a numeric text indicating the actual price '9700' may be printed on top of the Korean text ' 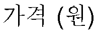 ' (meaning 'price (KRW)' in English), which is one of the items in a product label template. The text overlap area 300 may occur due to a printing error, leading to the existence of the number '9700' overlapping the Korean text ' 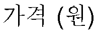 ' within the product label template. In addition, a numeric text indicating the actual weight '176' may be printed on top of the Korean text ' 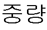 (g)' (meaning 'weight (g)' in English) within the product label template, and in this case, the text overlap area 300 with the overlapping texts may exist due to an error in the printing process.

The second image 320 is an example of a product label image containing English texts. The second image 320 may be an image in which texts representing detailed information of a product are printed on a product label template. For example, texts respectively indicating pieces of detailed information of the product may be printed on top of corresponding items in the product label template, such as packing date, sell-by date, net wt., unit price, and total price, and information such as the name/address of a mart selling the product may be printed on the product label template.

According to an embodiment of the disclosure, when obtaining an image including overlapping texts, the server 2000 may separate the overlapping texts to recognize the texts. For example, when text 'ABC' and text 'DEF' overlap such that the texts become unrecognizable like in the text overlap area 300 described above, the server 2000 may separate the text 'ABC' and the text 'DEF'.

Moreover, in the disclosure including FIG. 3, a Korean text, an English text, a numeric text, and the like will be described as examples of overlapping texts. However, this is merely an example for convenience of description, and a language of a text is not limited thereto.

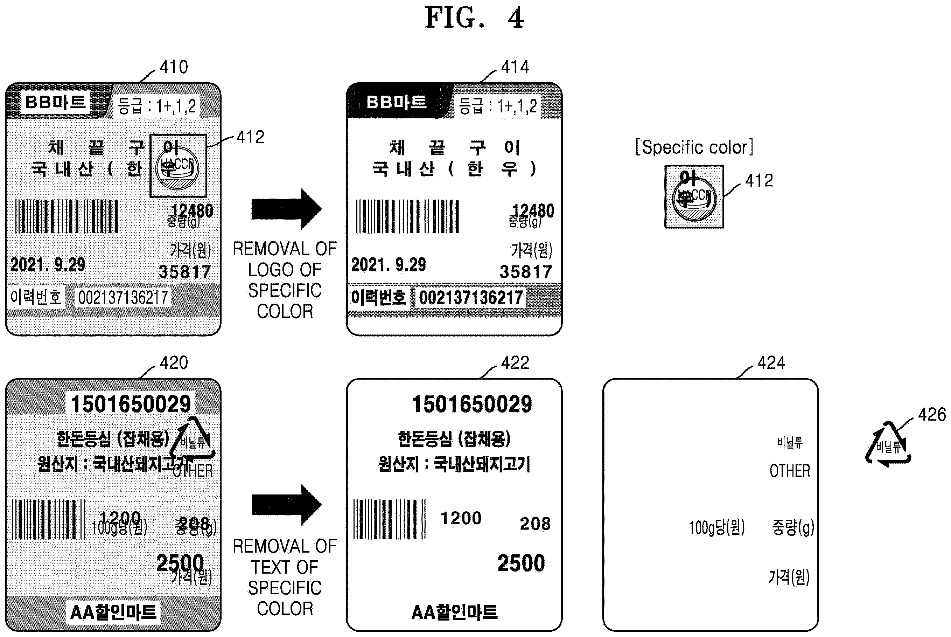

FIG. 4 is a diagram for describing an operation in which a server preprocesses an image for text separation, according to an embodiment of the disclosure.

In an embodiment of the disclosure, the server 2000 may preprocess an image including overlapping texts. Referring to FIG. 4, a first image 410 including overlapping texts and a second image 420 including overlapping texts are shown as an example. The server 2000 may preprocess an image based on color channel information of the image.

In an embodiment of the disclosure, the server 2000 may erase a specific color in an image. For example, when preprocessing the first image 410, the server 2000 may erase a logo 412 of a specific color in the first image 410. The server 2000 may identify the color of the logo 412 in order to remove the logo 412 of the specific color. The server 2000 may set a first threshold and a second threshold based on the color of the logo 412, and erase pixels having colors between the first threshold and the second threshold, thereby obtaining a preprocessed first image 414.

In an embodiment of the disclosure, the server 2000 may leave only a specific color intact in an image. For example, when preprocessing the second image 420, the server 2000 may leave only a black or achromatic color intact in the second image 420 while erasing the remaining colors therein.

For example, the server 2000 may obtain a preprocessed second image 422 by erasing pixels having a saturation less than a first threshold and a value less than a second threshold in the hue, saturation, and value (HSV) color space. In this case, items 424 having colors other than black may be deleted. The items 424 having the other colors may include, for example, text, a logo 426, a background color, etc., but are not limited thereto.

For example, the server 2000 may leave only an achromatic color intact in the red, green, and blue (RGB) color space. The server 2000 may obtain the preprocessed second image 422 by leaving only pixels in which the ratio of R, G, and B colors are within a certain range based on a preset threshold. In this case, the items 424 having colors other than the achromatic color may be deleted. The items 424 having the other colors may include, for example, a text, the logo 426, a background color, etc., but are not limited thereto.

In an embodiment of the disclosure, the server 2000 may selectively preprocess an image including overlapping texts. For example, the server 2000 may preprocess an image including overlapping texts as in the above-described example, and separate an overlapping text from the preprocessed image. Alternatively, for example, the server 2000 may directly separate an overlapping text without preprocessing the image including the overlapping texts.

An operation in which the server 2000 separates a text is further described with reference to the following drawings. In all of the following descriptions, preprocessing is selectively applicable when the server 2000 separates text.

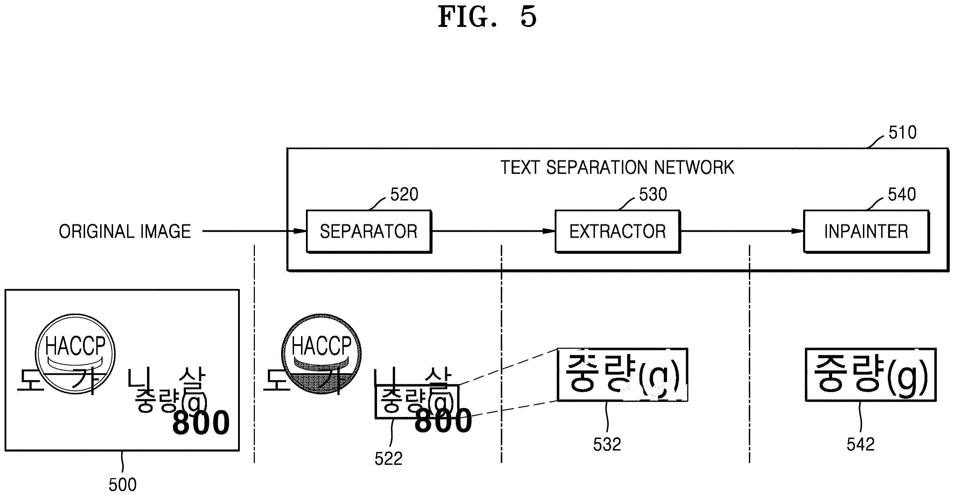

FIG. 5 is a diagram for describing a text separation network used by a server, according to an embodiment of the disclosure.

Referring to FIG. 5, the server 2000 may separate texts from an original image 500 by using a text separation network 510.

In an embodiment of the disclosure, the text separation network 510 may receive the original image 500 as an input and separate overlapping texts from the original image 500. The text separation network 510 may include a separator 520, an extractor 530, and an inpainter 540, which are modules for processing the original image 500. However, separation into a plurality of modules is merely an example for describing detailed operations of the text separation network 510, and the disclosure is not limited thereto. For example, two or more modules included in the text separation network 510 may be combined into one module, or at least one module may be omitted.

The separator 520 processes the original image 500 to separate text regions corresponding to texts in the original image 500. That is, the separator 520 may receive an image and determine a plurality of text regions in the image. Each of the plurality of text regions may be a region including characters classified in the same group in the image. For example, one text region may include Korean characters ' 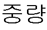 (g)' (meaning 'weight (g)' in English) 522 classified in the same group. However, FIG. 5 shows only one of the plurality of text regions, and the separator 520 separates all texts in the image into text regions.

In an embodiment of the disclosure, the separator 520 may be a module that clusters adjacent colors in an image by using a color clustering algorithm and groups characters based on a clustering result. The separator 520 may group colors in an image into K clusters by using, for example, a K-means algorithm, but is not limited thereto.

In an embodiment of the disclosure, the separator 520 may include one or more Al models.

The separator 520 may include a text detection model. The text detection model may be an Al model that receives an image as an input and outputs a text region map indicating a result of detecting locations of texts in the image. The text region map may be two-dimensional (2D) Gaussian score data representing the presence of text, but is not limited thereto. Furthermore, the text detection model may be trained based on training data including annotations of ground truths for text detection, such as characters from texts in the image, correlation between characters, etc. The text detection model may be implemented using various known deep neural network architectures and algorithms or through modification of the various known deep neural network architectures and algorithms.

The separator 520 may include a text separation model. The text separation model may be an Al model that receives an image as an input and outputs a result (e.g., a text region image, etc.) of separating texts from the image.

In an embodiment of the disclosure, the text separation model may be trained based on training data including annotations of ground truths, which are criteria for text separation, including at least one of a language, a font, a corpus, or a logo of each text. The text separation model may be implemented using various known deep neural network architectures and algorithms or through modification of the various known deep neural network architectures and algorithms.

Moreover, because the original image 500 is an image including overlapping texts, texts may overlap in a text region separated by the separator 520. For example, when a character group included in a text region is referred to as a first text, the first text and a part of a second text, which is text classified in another character group, may be included in the separated text region.

In an embodiment of the disclosure, the separator 520 may label pixels corresponding to characters in the first text. For example, the separator 520 may label pixels corresponding to characters in the first text with a certain value. The separator 520 may not label characters in the second text overlapping the first text, or may label the characters with a value other than that for the first text.

The extractor 530 may extract the pixels corresponding to the first text in the text region to obtain an image in which a portion of the first text is damaged. Here, when a portion of the first text is damaged, it is understood that pixels corresponding to only the first text are extracted but not pixels corresponding to the second text overlapping the first text.

In an embodiment of the disclosure, the extractor 530 may extract only pixels corresponding to the first text based on labels of the pixels corresponding to the first text in the text region, thereby obtaining an image 532 of the first text with a damaged portion.

The inpainter 540 may reconstruct damaged pixels in the image 532 of the first text. The inpainter 540 may be implemented as a deep neural network model that receives, as an input, an image including damaged pixels and outputs an image with the damaged pixels filled in. For example, the inpainter 540 may receive the image 532 of the damaged first text and output an image 542 of the reconstructed first text.

The inpainter 540 may be trained based on training data obtained by overlapping a noise text with a ground-truth text. The inpainter 540 may be implemented using various known deep neural network architectures and algorithms or through modification of the various known deep neural network architectures and algorithms.

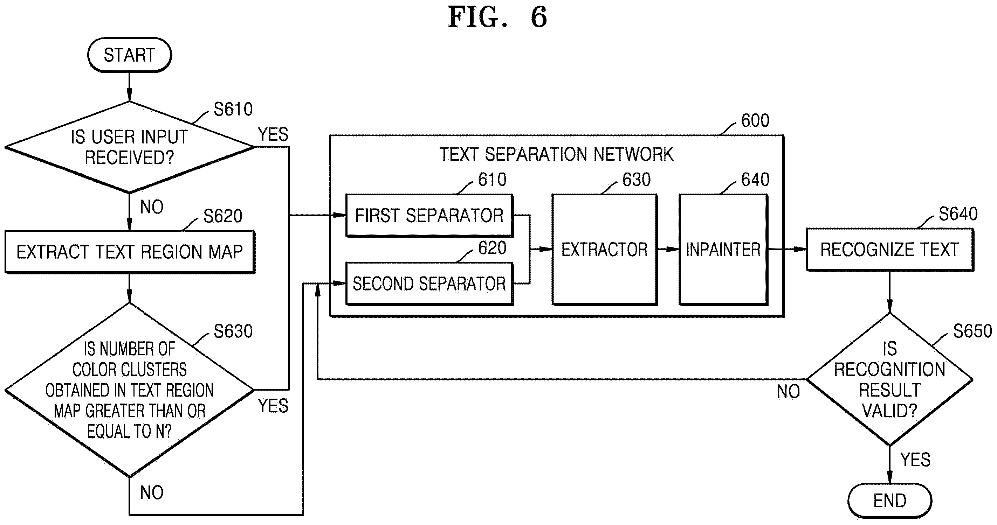

An operation in which the server 2000 separates overlapping texts by using the text separation network 510 and the modules (the separator 520, the extractor 530, and the inpainter 540) of the text separation network 510 is further described with reference to FIGS. 6 to 11B.

FIG. 6 is a diagram for describing an operation in which a server recognizes text in an image, according to an embodiment of the disclosure.

In an embodiment of the disclosure, a text separation network 600 may include a first separator 610 and a second separator 620.

The first separator 610 may be a module that clusters adjacent colors in an image by using a color clustering algorithm and groups characters based on a clustering result. The color clustering algorithm may be used to detect text from an image by grouping pixels with similar colors (e.g., adjacent colors in a color space) together. As a method for quantifying color similarity, Euclidean distances between different colors in the color space may be calculated and colors with smaller distances than a predetermined distance may be considered as similar colors and assigned to a same color group. Alternatively, or combined with the Euclidean distance-based method, color histograms that represent the distribution of colors in the image may be used to determine similar colors. The first separator 610 may group colors in the image into K clusters by using, for example, a K-means algorithm, but is not limited thereto. The first separator 610 may transmit a text region including grouped characters to the extractor 630.

The second separator 620 may include a text separation model. The text separation model may be an Al model that receives an image as an input and outputs a result of separating texts from the image (e.g., a text region including grouped characters). The second separator 620 may transmit a text region including a group of characters to the extractor 630.

The first separator 610 performs relatively light text separation operations compared to the second separator 620, and the second separator 620 performs relatively heavy operations compared to the first separator 610. Therefore, the second separator 620 may achieve higher text separation accuracy than the first separator 610.

The server 2000 may determine whether to use the first separator 610 or the second separator 620 of the text separation network 600 based on a preset condition. Hereinafter, preset conditions for which the first separator 610 and the second separator 620 are used are described.

In an embodiment of the disclosure, the server 2000 may obtain an input image. The input image may contain overlapping texts. The server 2000 may receive a user input for designating a specific region of the image (S610). For example, the server 2000 may receive a user input for designating a specific region of an image from a user's electronic device (e.g., a smartphone or a PC). The user input may be an input for designating text regions containing overlapping texts within the image. The server 2000 may perform text separation based on a user input for designating text regions containing overlapping texts. In an embodiment of the disclosure, the server 2000 may first perform text recognition (e.g., optical character recognition (OCR), etc.) on the input image. When a text recognition result for the input image is not obtained due to text overlap, the server 2000 may determine to use the first separator 610 to obtain a text recognition result. When the server 2000 uses the text separation network 600 for the first time, a priority of the first separator 610 may be set higher than that of the second separator 620.

The server 2000 may perform text separation by using the first separator 610. For example, the server 2000 may perform color clustering by using the first separator 610 and separate texts of different colors based on color clusters. For example, the server 2000 may separate black text and red text.

When there is no user input, the server 2000 extracts a text region map for the input image (S620). The server 2000 may obtain a text region map by using a text detection model. The text detection model may be an Al model that receives an input image and outputs a text region map indicating a result of detecting locations of texts in the image.

The server 2000 may apply a color clustering algorithm to text regions in the image based on the text region map (S630). The server 2000 may obtain color clusters for each of the text regions present in the image based on the text region map, and determine to use either the first separator 610 or the second separator 620 based on whether the number of the obtained color clusters is greater than or equal to a preset number N (e.g., three).

The server 2000 may use the first separator 610 when the number of color clusters is greater than or equal to the preset number N. When the number of color clusters is greater than or equal to the preset number N, it means that there are three or more texts of different colors in a corresponding text region. In this case, the server 2000 may separate texts based on their colors by using the first separator 610. For example, when a second text overlaps a first text, and the first text and the second text have different colors, the server 2000 may separate the first text and the second text. The server 2000 may extract pixels corresponding to characters in the first text by using the extractor 630. Here, the server 200 may not extract pixels corresponding to characters in the second text that overlap with the first text, and as a result, an image may be generated where a portion of the first text is damaged or incomplete due to the overlapping second text. In order to address this issue, the server 2000 may reconstruct the damaged portion of the first text in the image by using the inpainter 640. The inpainter 640 may reconstruct the first text by filling in the missing parts of the damaged portion of the first text, and may output an image including the reconstructed first text. According to embodiments of the present disclosure, the server 2000 may use the extractor 630 to separate out the first text from the image while ignoring the overlapping second text, and the server 2000 may use the inpainter 640 to repair and reconstruct any damaged areas of the first text caused by the overlapping, resulting in an image that shows the restored first text.

The server 2000 may perform text recognition based on a reconstructed image obtained from the inpainter 640 (S640). For example, the server 2000 may recognize a text (e.g., ordinary characters, special characters, symbols, etc.) included in the image by using an OCR model. The text obtained by the server 2000 via the text recognition may include information related to a product. For example, when the input image is an image of a product label, the server 2000 may obtain text related to the product, which is included in the product label, as product information. In an embodiment of the disclosure, the text recognition may be performed by an external device connected to the server 2000. For example, the server 2000 may transmit an image including text, which is obtained through the text separation network 600, to a user's electronic device (e.g., a smartphone, etc.). In this case, OCR may be performed by the user's electronic device.

In an embodiment of the disclosure, the server 2000 may verify the validity of a text recognition result (S650). For example, the server 2000 may determine the validity of an OCR result based on whether recognition confidence included in the OCR result is greater than or equal to a preset value. For example, the server 2000 may determine whether the text recognition result is valid based on a preset criterion. Specifically, the server 2000 may determine whether the recognized text satisfies a predefined format, i. e., a 20-digit number representing an identification number for identifying the product. For example, the server 2000 may verify whether recognized text numbers, corpora, words, etc. were correctly recognized. When determining that the text recognition result is not valid, the server 2000 may use the second separator 620 to perform more precise text separation and recognition again.

The server 2000 may use the second separator 620 when the number of color clusters is less than the preset number. Also, the server 2000 may use the second separator 620 based on the validity of the text recognition result as described above.

By using the second separator 620, the server 2000 may separate the texts by determining text regions based on at least one of a language, a font, a corpus, or a logo of each text. The second separator 620 may be an Al model that receives, as an input, an original image including text and outputs an image including a unit of the text (e.g., a character group). The output of the second separator 620 is sequentially transmitted to the extractor 630 and the inpainter 640, so that the same operations as in the case of separating and recognizing text by using the first separator 610 may be performed again.

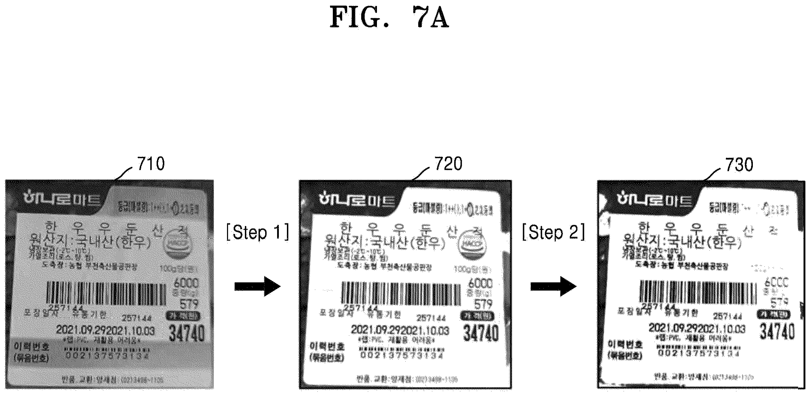

FIG. 7A is a diagram for describing an operation in which a server uses color information for text separation, according to an embodiment of the disclosure.

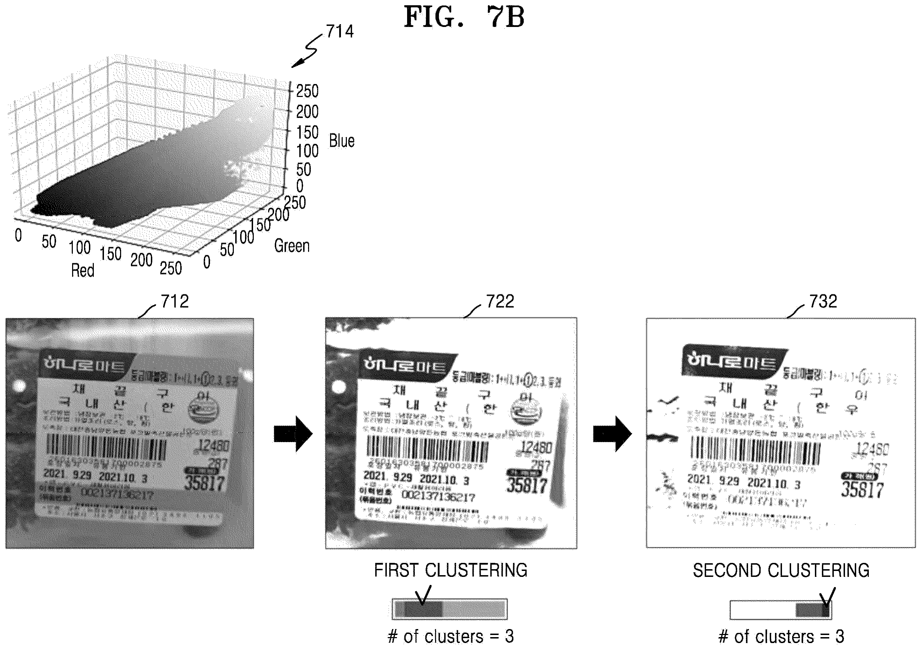

A separator described with reference to FIGS. 7A and 7B may correspond to the first separator 610 of FIG. 6.

In an embodiment of the disclosure, the server 2000 may filter out colors of objects other than text (e.g., a background, a logo, etc.) from an image by using a color clustering algorithm. By using the separator, the server 2000 may perform color clustering by highlighting a black color in an original image 710 including overlapping texts.

In an embodiment of the disclosure, the server 2000 may convert the original image 710 into a cyan, magenta, yellow, and black (CYMK) color space. In the CYMK color space of the original image 710, the server 2000 may filter out colors based on a threshold value for a K channel representing black to obtain a first filtered image 720 (step 1). As a result of the first filtering of the original image 710 by the server 2000, a bright chromatic color (e.g., yellow, etc.) and the like may be removed from the original image 710.

In an embodiment of the disclosure, the server 2000 may convert the first filtered image 720 into a Lab color space. The server 2000 may perform color clustering in the Lab color space and extract information about a cluster adjacent to black among color clusters, thereby obtaining a secondary filtered image 730 (step 2).

According to an embodiment of the disclosure, the server 2000 may extract pixels corresponding to the text and/or characters in the text from the secondary filtered image 730 and reconstruct damaged pixels.

FIG. 7B is a diagram for describing an operation in which a server uses color information for text separation, according to an embodiment of the disclosure.

In an embodiment of the disclosure, the server 2000 may filter colors of objects other than text (e.g., a background, a logo, etc.) in an image by using a color clustering algorithm. For example, the server 2000 may obtain an original image 712 including overlapping texts, and obtain a color distribution 714 of the original image 712. The server 2000 may obtain, for example, a color distribution graph, an RGB histogram, or the like, but the disclosure is not limited thereto. The server 2000 may determine a target number N based on the color distribution 700 to group colors in the image into N clusters. For example, the server 2000 may determine N dominant colors in an image based on color distribution to perform color clustering, but the disclosure is not limited thereto. For example, the server 2000 may receive the target number N from the user.

The server 2000 may iteratively perform color clustering. For example, the server 2000 may perform first color clustering on the original image 712 to obtain a first filtered image 722 that has a reduced number of colors compared to the original image 710. Specifically, the server 2000 may group the colors in the original image 712 into three clusters, and filter out colors not included in the three clusters. The server 2000 may then perform second color clustering on the first filtered image 722 to precisely filter out colors from the first filtered image 722. In detail, the server 2000 may group the colors in the first filtered image 722 into three clusters and filter out colors not included in the three clusters, thereby obtaining a secondary filtered image 732.

According to an embodiment of the disclosure, the server 2000 may extract pixels corresponding to the text and/or characters in the text from the secondary filtered image 732 and reconstruct damaged pixels.

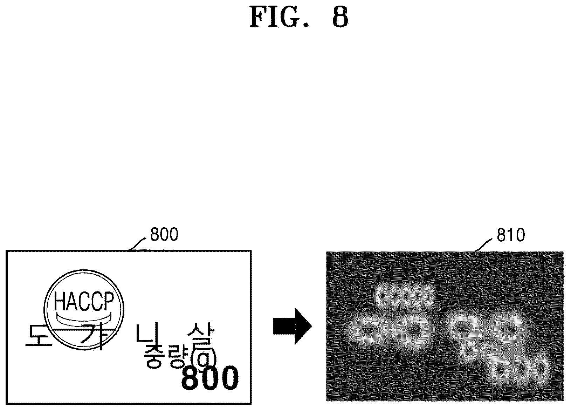

FIG. 8 is a diagram for describing an operation in which a server detects text regions in an image, according to an embodiment of the disclosure.

In an embodiment of the disclosure, the server 2000 may detect regions corresponding to texts in an image. The server 2000 may detect texts by using a separator. A text detection model may be an Al model that receives an input image 800 and outputs a text region map 810 indicating a result of detecting locations of texts in the input image 800.

In an embodiment of the disclosure, the server 2000 may train the text detection model based on a training dataset including training images. A training image may be labeled with text boxes around characters from text in an image. In addition, the training image may be labeled with affinity boxes for linking related characters from text in the image. The related characters may be characters constituting one word or one sentence, but are not limited thereto.

The text detection model may calculate a 2D Gaussian score representing the presence of text in the input image 800. The server 2000 may output the text region map 810 indicating regions where texts are present in the input image 800 based on the 2D Gaussian score.

In an embodiment of the disclosure, the server 2000 may obtain the text region map 810 for the input image 800, and perform a text separation operation with the separator based on the text region map 810. In this case, the separator used by the server 2000 may further receive the text region map 810 as well as the input image 800.

In an embodiment of the disclosure, the text detection model may be included in the separator. For example, a first separator and/or a second separator may include a text detection model to perform text detection first, and then perform the operation of the first separator and/or the second separator.

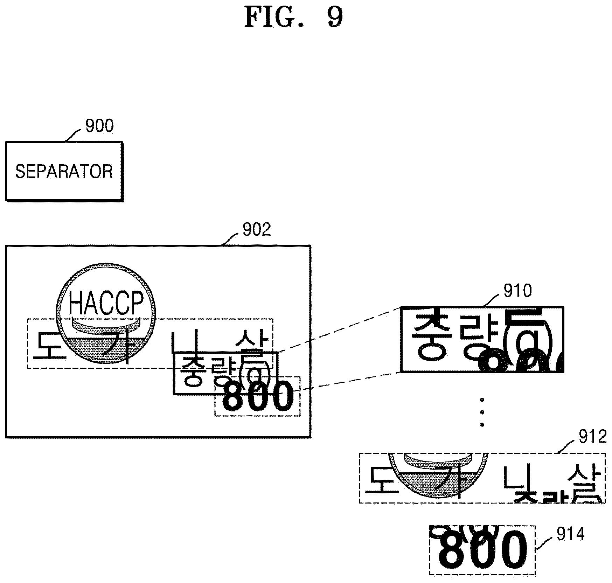

FIG. 9 is a diagram for describing an operation in which a server separates text regions from an image, according to an embodiment of the disclosure.

A separator 900 described with reference to FIG. 9 may correspond to the second separator 620 of FIG. 6.

In an embodiment of the disclosure, the server 2000 may separate a plurality of text regions from an input image 902 by using the separator 900.

For example, the server 2000 may obtain a first text region 910 from the input image 902. The first text region 910 may include a first text and a second text. Here, the first text refers to a text corresponding to one character group (e.g., a word, a sentence, a corpus, etc.), and the second text refers to a text separated together as the first text region is separated from the input image 902. The second text may overlap the first text. Thus, the second text is considered as noise with respect to the first text while reconstructing the first text. For example, at least a part of the second text may overlap the first text. To recognize the first text in the first text region 910, the server 2000 may extract only pixels corresponding to the first text and reconstruct pixels damaged due to the first text being overlapped by the second text.

The server 2000 separates text regions respectively corresponding to all texts included in the input image 902. For example, the server 2000 may obtain a second text region 912. The second text region 912 may include a first text corresponding to one complete character group and a second text that is considered as noise with respect to the first text in the second text region 912. Also, the server 2000 may obtain a third text region 914. The third text region 914 may include a first text and a second text.

According to an embodiment of the disclosure, when separating the plurality of text regions by using the separator 900, the server 2000 may distinguish a first text from a second text included in each of the text regions. For example, the separator 900 may be an Al model trained to assign different labels to the first text and the second text.

In an embodiment of the disclosure, the separator 900 may be trained to distinguish between languages of texts. For example, the separator 900 may distinguish between languages of texts (e.g., English, Korean, etc.) to separate text regions based on different languages. In some embodiments of the disclosure, the server 2000 may obtain a user input for designating a language. In this case, the separator 900 may additionally use the user input as input data.

In an embodiment of the disclosure, the separator 900 may be trained to distinguish between fonts of texts. For example, the separator 900 may distinguish between fonts of texts to separate text regions based on different fonts.

In an embodiment of the disclosure, the separator 900 may be trained to distinguish between corpora of texts. For example, the separator 900 may distinguish between corpora (e.g., weight (g)) of texts to separate text regions based on different corpora. In this case, even when characters included in a corpus are characters of different languages (e.g., Hangul and English alphabets) or have different fonts, the corpus may be distinguished as a single corpus.

To distinguish a language, a font, a corpus, and a logo of each text from that of other texts through the separator 900, the server 2000 may train the separator 900 based on training data annotated by applying a label to pixels corresponding to characters in one character group.

According to an embodiment of the disclosure, the server 2000 may obtain a plurality of text regions from the image, and extract and/or reconstruct a first text included in each of the text regions for each text region.

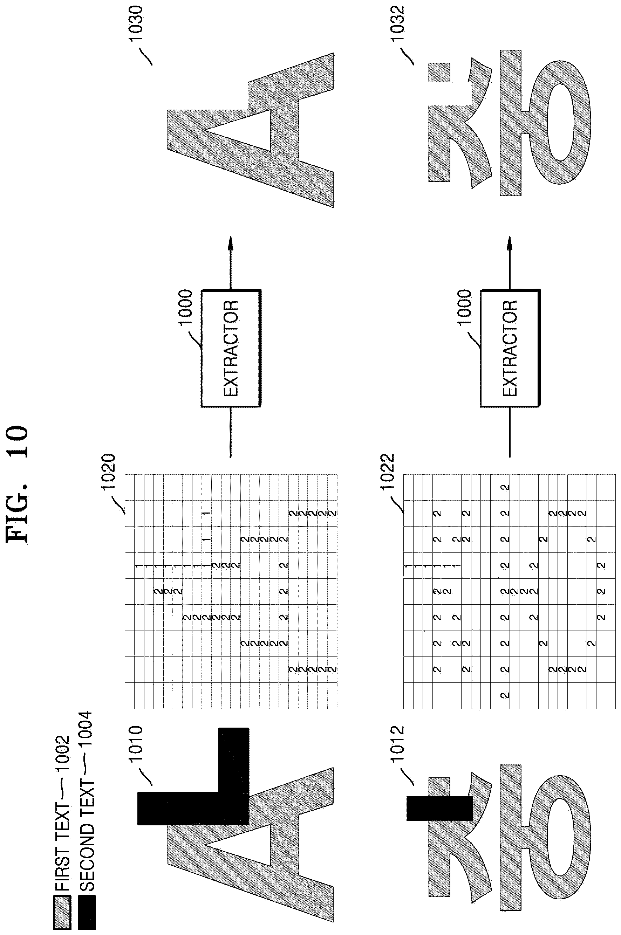

FIG. 10 is a diagram for describing an operation in which a server extracts a first text from a text region, according to an embodiment of the disclosure.

In an embodiment of the disclosure, when the server 2000 separates a text by using a separator, a text region is obtained. The server 2000 determines a text region by determining a character group including characters, based on a word, a sentence, a corpus, or the like. The server 2000 may extract pixels corresponding to a text from a text region by using an extractor 1000. For convenience of description, FIG. 10 shows only one character instead of all characters from a character group in a text region.

For example, a first text region 1010 containing an English text may include a first text 1002 and a second text 1004. Here, the first text 1002 may be an alphabet letter 'A', and the second text 1004 overlapping the first text 1002 may be an alphabet letter 'L'. The first text region 1010 may include information 1020 about the first text 1002 and the second text 1004. For example, different labels may be assigned to a character from the first text 1002 and a character from the second text 1004.

Based on the first text region 1010 and the information 1020 about the first text 1002 and the second text 1004 included in the first text region 1010, the server 2000 may obtain an image 1030 in which a portion of the first text 1002 in the first text region 1010 is damaged.

In the same way, the server 2000 may obtain a second text region 1012 containing a Korean text. The second text region 1012 may include a first text 1002 and a second context 1004. Furthermore, the server 2000 may obtain information 1022 about the first text 1002 and the second text 1004 included in the second text region 1012. Based on the second text region 1012 and/or the information 1022 about the first text 1002 and the second text 1004 included in the second text region 1012, the server 2000 may obtain an image 1032 in which a portion of the first text 1002 in the second text region 1012 is damaged.

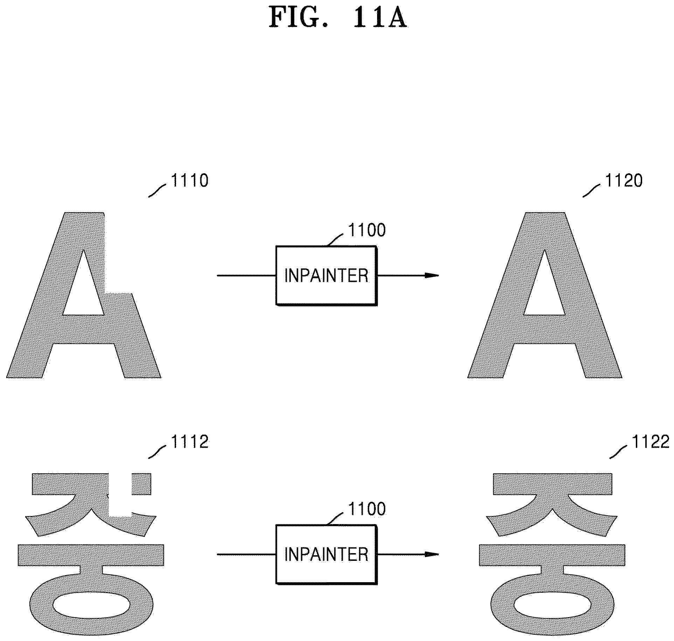

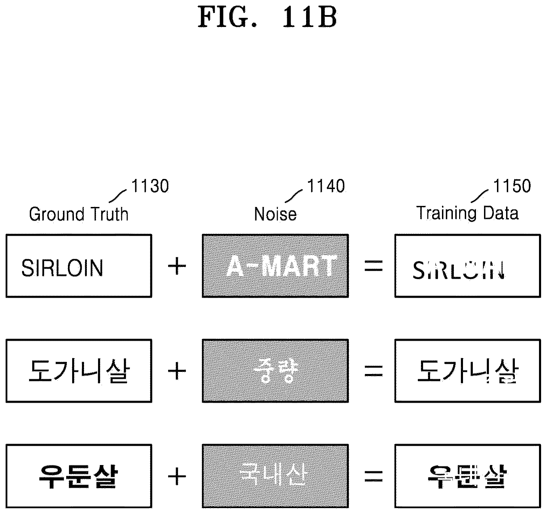

The server 2000 may inpaint an image in which a portion of the first text 1002 in a text region is damaged. The inpainting is further described with reference to FIGS. 11A and 11B.

FIG. 11A is a diagram for describing an operation in which a server inpaints an image including a damaged text, according to an embodiment of the disclosure.

In an embodiment of the disclosure, the server 2000 may reconstruct a damaged pixel in an image by using an inpainter 1100.

The inpainter 1100 may reconstruct a first text by inpainting an area where the first text is overlapped by a second text. For example, as in the example described with reference to FIG. 10, the first text may be the alphabet letter 'A', and the second text overlapping the first text may be the alphabet letter 'L'. In this case, the inpainter 1100 may receive, as an input, an image 1110 in which a portion region of the first text is damaged, and output an inpainted image 1120 in which the damaged portion is reconstructed.

In the same way, the server 2000 may reconstruct a Korean text. The server 2000 may input, to the inpainter 1100, an image 1112 in which a portion of a Korean character in a first text is damaged, and obtain an inpainted image 1122 in which the damaged portion is reconstructed.

In an embodiment of the disclosure, the server 2000 may perform preprocessing before reconstructing an image including a damaged portion by using the inpainter 1100. For example, the server 2000 may reduce the number of color channels to one by converting an image including a damaged portion into grayscale. Accordingly, computational complexity may be reduced by reducing the number of color channels.

The inpainter 1100 may be implemented using various known deep neural network architectures and algorithms, or through modification of the various known deep neural network architectures and algorithms. According to an embodiment of the disclosure, the server 2000 may generate training data for training the inpainter 1100 and train the inpainter 1100 by using a training dataset. Generation of training data for the inpainter 1100 is further described with reference to FIG. 11B.

FIG. 11B is a diagram for describing an operation in which a server generates training data for an inpainter, according to an embodiment of the disclosure.

In an embodiment of the disclosure, the server 2000 may generate training data 1150 for training the inpainter 1100. The server 2000 may generate training data 1150 based on ground truth data 1130 and noise data 1140.

The server 2000 may generate the training data 1150 by overlapping the noise data 1140 with the ground truth data 1130. For example, the server 2000 may generate training data 1150 in which a portion of the ground truth data 1130 is damaged by removing, from the ground truth data 1130, pixels in the noise data 1140 overlapping the ground truth data 1130. Here, the ground truth data 1130 corresponds to a first text in the above-described embodiment of the disclosure, and the noise data 1140 corresponds to a second text.

In an embodiment of the disclosure, when generating the training data 1150, the server 2000 may generate the training data 1150 based on at least one of a language, a font, or a corpus of a text. The server 2000 may generate the training data 1150 by using texts with a high probability of overlapping as the ground truth data 1130 and the noise data 1140. The texts with a high probability of overlapping may be determined based on a correlation between the texts. For example, texts with a high probability of overlapping may be preset based on at least one of a language, a font, or a corpus of each text. For example, texts with a high probability of overlapping may have been set as texts with a high probability of overlapping, based on a user input. For example, in a case where A Mart sells a sirloin product, and a product label has an overlap between a trade name 'A Mart' and a product name 'SIRLOIN', 'SIRLOIN' and 'A-MART' may be set as texts with a high probability of overlapping. Although FIG. 11B shows an example in which the training data 1150 is generated using 'SIRLOIN' as the ground truth data 1130 and 'A-MART' as the noise data 1140, the training data 1150 may be generated by setting 'SIRLOIN' as the noise data 1140 and 'A-MART' as the ground truth data 1130. In the same manner, the server 2000 may generate the training data 1150 by using the ground truth data 1130 and the noise data 1140 that are Korean texts and are set based on correlation between the texts.

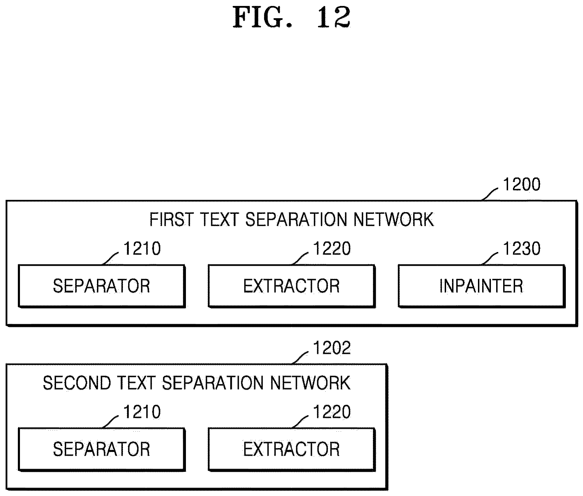

FIG. 12 is a diagram for describing a text separation network according to an embodiment of the disclosure.

In an embodiment of the disclosure, a text separation network may be divided into a first text separation network 1200 and a second text separation network 1202.

The first text separation network 1200 may include a separator 1210, an extractor 1220, and an inpainter 1230. Because the separator 1210, the extractor 1220, and the inpainter 1230 included in the first text separation network 1200 have been described above with reference to the foregoing drawings, descriptions thereof will not be repeated below.

The second text separation network 1202 may include only a separator 1210 and an extractor 1220. The separator 1210 and the extractor 1220 included in the second text separation network 1200 respectively perform the same functions as the separator 1210 and extractor 1220 in the first text separation network 1200. Because the second text separation network 1202 does not include the inpainter 1230, the second text separation network 1202 requires a relatively small amount of computation for the text separation operation compared to the first text separation network 1200. That is, the second text separation network 1202 may be a lite version of the first text separation network 1200.

The server 2000 may selectively use the first text separation network 1200 or the second text separation network 1202.

In an embodiment of the disclosure, the server 2000 may preferentially use the second text separation network 1202 and use the first text separation network 1200 as a second priority. The server 2000 may obtain an image including a separated text by using the second text separation network 1202. The server 2000 may recognize the text (e.g., ordinary characters, special characters, symbols, etc.) included in the image by using an OCR model. The server 2000 may determine the validity of an OCR result that is a text recognition result based on whether recognition confidence for the OCR result is greater than or equal to a preset value. When determining that the text recognition result is not valid, the server 2000 may use the first text separation network 1200 further including the inpainter 1230 to perform more precise text separation and text recognition again.

In an embodiment of the disclosure, for faster output of a computation result, the server 2000 may perform text separation by using the second text separation network 1202 instead of the first text separation network 1200. In this case, the server 2000 may provide the user with an image of an uninpainted text, or provide the user with a result of recognizing the text based on the image of the uninpainted text.

In an embodiment of the disclosure, the server 2000 may determine whether to use the first text separation network 1200 or the second text separation network 1202, based on a user input. For example, the user may choose to utilize the second text separation network 1202 to use less data.

In an embodiment of the disclosure, the server 2000 may determine whether to use the first text separation network 1200 or the second text separation network 1202 based on user information. For example, the server 2000 may provide the second text separation network 1202 as a trial version to free users.

In an embodiment of the disclosure, text separation and recognition may be performed by a user's electronic device (e.g., a smartphone). Because the user's electronic device has relatively low computing performance compared to the server 2000, the user's electronic device may perform text separation and recognition by using the second text separation network 1202. For example, when the user captures an image of a label including texts by using a smartphone, the smartphone may separate an overlapping text by using the second text separation network 1202. When the overlapping text is separated, the smartphone may recognize the separated text by using OCR.

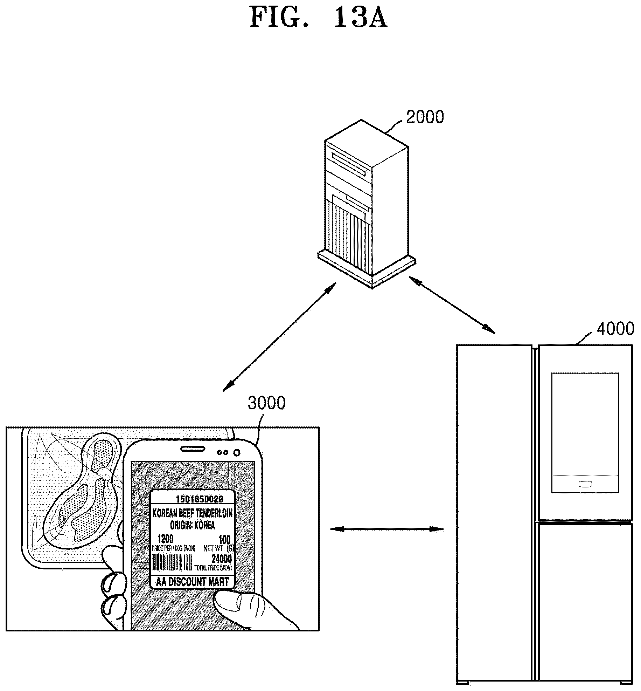

FIG. 13A is a diagram for describing an example in which a server operates in conjunction with a refrigerator that is a home appliance, according to an embodiment of the disclosure.

Referring to FIG. 13A, the server 2000 may perform data communication with a user's electronic device 3000 and a refrigerator 4000.

In an embodiment of the disclosure, user may capture an image of a product label by using the user's electronic device 3000. Although an example in which a product label, of which an image has been captured by the user, is a label of a meat product is described with reference to FIGS. 13A to 13C, a type of a product is not limited thereto. For example, the product may be food. The server 2000 may receive an image of the product label from the user's electronic device 3000. In this case, the image of the product label may include overlapping texts.

The server 2000 may separate the overlapping texts from the image and recognize the separated texts to generate information related to the product. For example, the server 2000 may generate information related to a meat product, such as a product name, a weight, a price, a barcode, a product identification number, a manufacturing date, a manufacturer, a distributor, an expiration date, etc. The server 2000 may transmit the information related to the product to the user's electronic device 3000 and/or the refrigerator 4000.

The server 2000 may control the refrigerator 4000 based on the information related to the product. For example, the server 2000 may receive an input of a location where meat is to be stored within the refrigerator 4000, or determine a location where the meat is to be stored (e.g., an empty space in the refrigerator 4000). The server 2000 may control the refrigerator 4000 to operate in a meat storage mode in which an optimal temperature or the like is set at the determined storage location.

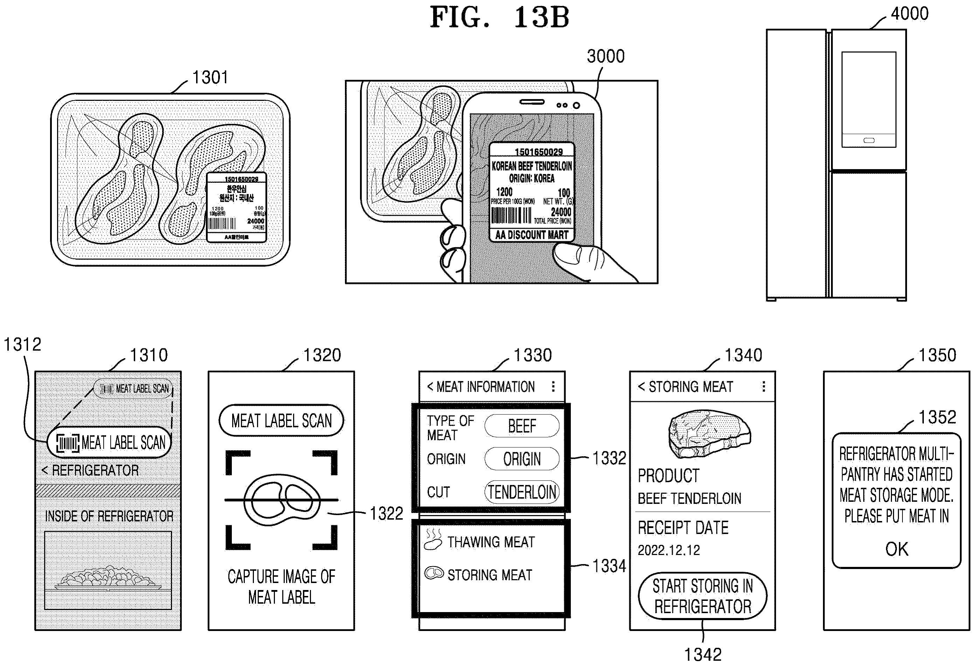

FIG. 13B is a diagram for further describing an example in which a server operates in conjunction with a refrigerator that is a home appliance.

In an embodiment of the disclosure, the user may capture an image of a meat product 1301 by using the electronic device 3000 and obtain a label image for the meat product 1301. The server 2000 may obtain the label image for the meat product 1301 from the electronic device 3000. The server 2000 may perform text separation and text recognition on the label image for the meat product 1301 to provide information related to the meat product 1301 to the electronic device 3000.

In an embodiment of the disclosure, the electronic device 3000 of the user may provide an application capable of remotely managing various home appliances in the home. The application may be, for example, an application capable of managing/controlling the refrigerator 4000, but is not limited thereto.

Referring to a first screen 1310 of the application installed on the electronic device 3000, the application may include an interface for product label recognition. For example, the first screen 1310 may include a meat label scan button 1312, but is not limited thereto.

In response to the user selecting the meat label scan button 1312, the electronic device 3000 may display a second screen 1320 that allows product label recognition to be performed. For example, the electronic device 3000 may display a quadrilateral box 1322 (however, its shape is not limited to a quadrilateral and may include other shapes that may serve a similar function, such as a circle) for guiding the product label to be included inside the second screen 1320, and display a guide such as 'Capture an image of a meat label'. In some embodiments of the disclosure, when an object is not recognized in an image displayed on the second screen 1320, the electronic device 3000 may display a guide such as 'Please point the camera at the product'. The electronic device 3000 may display a preview image obtained from the camera on the second screen 1320. While viewing the second screen 1320, the user may adjust a field of view of the camera so that the product label is completely included in an image of the quadrilateral box 1322.

The electronic device 3000 may transmit an image of the product label to the server 2000. For example, the user of the electronic device 3000 may transmit an image of the meat label to the server 2000 via an application. The electronic device 3000 may receive information related to a product (e.g., the meat product 1301), which is generated by the server 2000 based on the image of the product label. The electronic device 3000 may display, on a third screen 1330, the information related to the product received from the server 2000. For example, the electronic device 3000 may display information 1332 indicating the meat product 1301, such as the type of meat, country of origin, cut, weight, individual traceability number, etc. For example, the electronic device 3000 may display action information 1334 related to control of a home appliance, such as storing meat. The home appliance may be, for example, the refrigerator 4000, but is not limited thereto.

The electronic device 3000 may display a fourth screen 1340 showing the action information 1334 regarding the home appliance associated with the product. For example, when the user selects an action of 'storing meat' on the third screen 1330 to store meat in the refrigerator 4000, the electronic device 3000 may display the fourth screen 1340 including items related to storing the meat. For example, a photo of the meat, a product name, a receipt date, a storage location, etc. may be displayed on the fourth screen 1340, but the disclosure is not limited thereto. Also, the fourth screen 1340 may include an interface via which the electronic device 3000 or the server 2000 controls the refrigerator 4000. For example, the electronic device 3000 may display, on the fourth screen 1340, a button 1342 for controlling the refrigerator 4000 (e.g., 'start storing in the refrigerator'), but is not limited thereto.

When the user selects the button 1342 for controlling the refrigerator 4000, the electronic device 3000 may provide a guide 1352 related to manipulation of the refrigerator 4000 to the user. For example, the electronic device 3000 may display, on a fifth screen 1350, the guide 1352 that enables the user to store the meat in the refrigerator 4000 (e.g., 'The refrigerator multi-pantry has started a meat storage mode. Please put meat in.').

The electronic device 3000 may transmit a control command for the refrigerator 4000 to control the refrigerator 400 to operate a multi-pantry space in a meat storage mode The electronic device 3000 may transmit a control command for the refrigerator 4000 to the refrigerator 4000 via the server 2000 or directly to the refrigerator 4000.

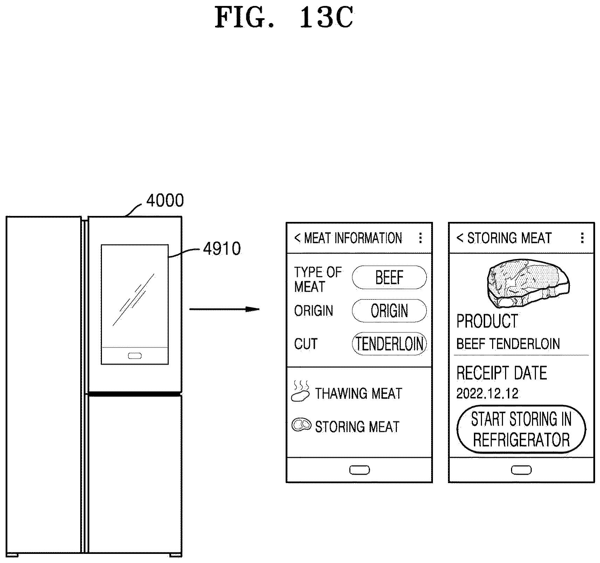

FIG. 13C is a diagram for describing an operation of a home appliance in conjunction with a server.

In an embodiment of the disclosure, the server 2000 may operate in conjunction with the refrigerator 4000 as described above with reference to FIGS. 13A and 13B. In detail, the server 2000 may transmit information related to a product to the refrigerator 4000. In this case, the information related to the product may be displayed on a display 4910 of the refrigerator 4000.

For example, when a product label is a meat product label as in the above-described example, information indicating a meat product, such as the type of meat, country of origin, cut, weight, individual traceability number, etc. may be displayed on the display 4910 of the refrigerator 4000.

For example, when the user stores meat corresponding to a recognized meat product label in the refrigerator 4000, the display 4910 of the refrigerator 4000 may display information related to the meat product, such as a location where the meat is stored, a storage period, a storage temperature, an operation mode, etc. Alternatively, the display 4910 of the refrigerator 4000 may display various pieces of information related to the product, such as text, images, and videos indicating recipes for the meat product, recommendations for ingredients related to meat dishes, and providing links to purchase the ingredients.

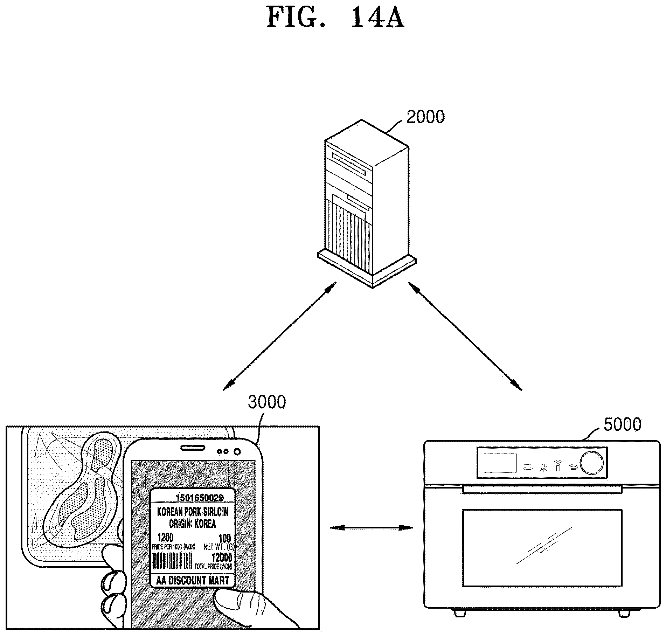

FIG. 14A is a diagram for describing an example in which a server operates in conjunction with an oven that is a home appliance, according to an embodiment of the disclosure.

Referring to FIG. 13A, the server 2000 may perform data communication with a user's electronic device 3000 and an oven 5000.

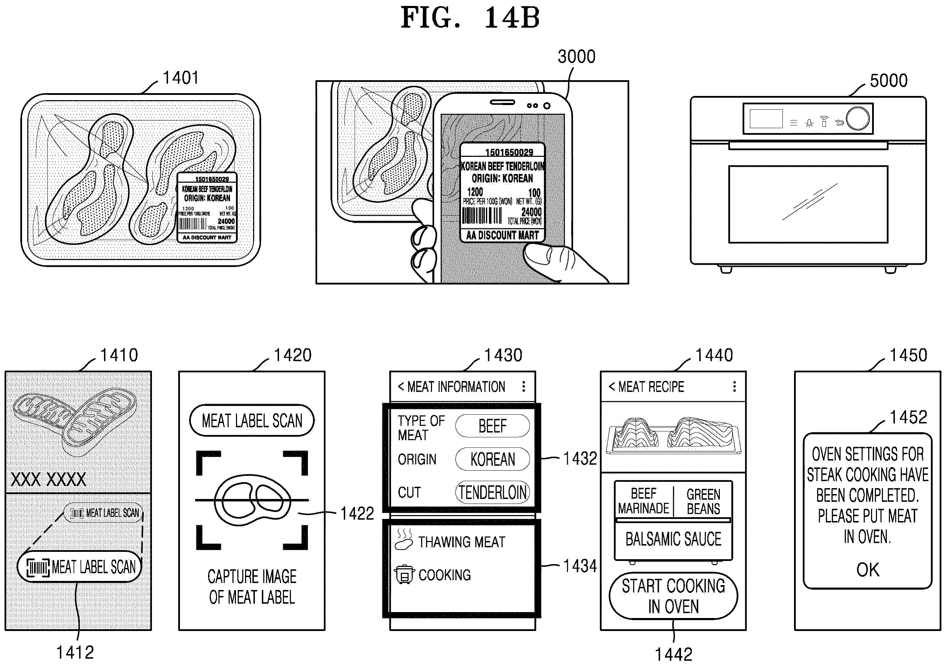

In an embodiment of the disclosure, a user may capture an image of a product label by using the user's electronic device 3000. Although an example in which a product label, of which an image has been captured by the user, is a label of a meat product is described with reference to FIGS. 14A and 14B, a type of a product is not limited thereto. For example, the product may be food. The server 2000 may receive an image of the product label from the user's electronic device 3000. In this case, the image of the product label may include overlapping texts.

The server 2000 may separate overlapping texts from the image and recognize the separated texts to generate information related to the product. For example, the server 2000 may generate information related to a meat product, such as a product name, a weight, a price, a barcode, a product identification number, a manufacturing date, a manufacturer, a distributor, an expiration date, etc. The server 2000 may transmit the information related to the product to the user's electronic device 3000 and/or the oven 5000.

The server 2000 may control the oven 5000 based on the information related to the product. For example, the server 2000 may determine a temperature, time, and an operation mode (e.g., a preheat mode, a convection mode, etc.) that are settings for steak cooking. The server 2000 may transmit settings related to the determined control operation for the oven 5000 to the oven 5000 so that the settings for steak cooking are automatically applied in the oven 5000.

FIG. 14B is a diagram for further describing an example in which a server operates in conjunction with an oven that is a home appliance.

In an embodiment of the disclosure, the user may capture an image of a meat product 1401 by using the electronic device 3000 and obtain a label image for the meat product 1401. The server 2000 may obtain a label image for a product from the electronic device 3000 and perform text separation and text recognition on the label image to provide information related to the product to the electronic device 3000.

In an embodiment of the disclosure, the electronic device 3000 of the user may provide an application capable of remotely managing various home appliances in the home. The application may be, for example, an application capable of managing/controlling the oven 5000, but is not limited thereto.

Referring to a first screen 1410 of the application installed on the electronic device 3000, the application may include an interface for product label recognition. For example, the first screen 1410 may include a meat label scan button 1412, but is not limited thereto.

In response to the user selecting the meat label scan button 1412, the electronic device 3000 may display a second screen 1420 that allows product label recognition to be performed. For example, the electronic device 3000 may display a quadrilateral box 1422 (however, its shape is not limited to a quadrilateral and may include other shapes that may serve a similar function, such as a circle) for guiding the product label to be included inside the second screen 1420, and display a guide such as 'Capture an image of a meat label'. In embodiments of the disclosure, when an object is not recognized in an image displayed on the second screen 1420, the electronic device 3000 may display a guide such as 'Please point the camera at the product'. The electronic device 3000 may display a preview image obtained from the camera on the second screen 1420. While viewing the second screen 1420, the user may adjust a field of view of the camera so that the product label is completely included in an image of the quadrilateral box 1422.

The electronic device 3000 may transmit an image of the product label to the server 2000, and display, on a third screen 1430, the information related to the product received from the server 2000. For example, the electronic device 3000 may display information 1432 indicating the meat product 1401, such as the type of meat, country of origin, cut, weight, individual traceability number, etc. For example, the electronic device 3000 may display action information 1434 related to control of a home appliance, such as thawing meat, cooking, recipes, etc. The home appliance may be, for example, the oven 5000, but is not limited thereto.

The electronic device 3000 may display a fourth screen 1440 showing the action information 1434 regarding the home appliance associated with the product. For example, when the user selects an action of 'cooking' on the third screen 1430 to cook a steak with meat, the electronic device 3000 may display the fourth screen 1440 including information related to steak cooking. For example, recipes and settings and preparation items for cooking may be displayed on the fourth screen 1440, but the disclosure is not limited thereto. Also, the fourth screen 1440 may include an interface via which the electronic device 3000 or the server 2000 controls the oven 5000. For example, the electronic device 3000 may display, on the fourth screen 1440, a button 1442 for controlling the oven 5000 (e.g., 'start cooking in the oven'), but is not limited thereto.

When the user selects the button 1442 for controlling the oven 5000, the electronic device 3000 may provide a guide 1452 related to manipulation of the oven 5000 to the user. For example, the electronic device 3000 may display, on a fifth screen 1450, the guide 1452 'Oven settings for steak cooking has been completed. Please put the meat in the oven,' which enables the user to cook the steak.

The electronic device 3000 may transmit a control command for the oven 5000 to the server 2000 or the oven 5000 to set a cooking operation mode of the oven 5000.

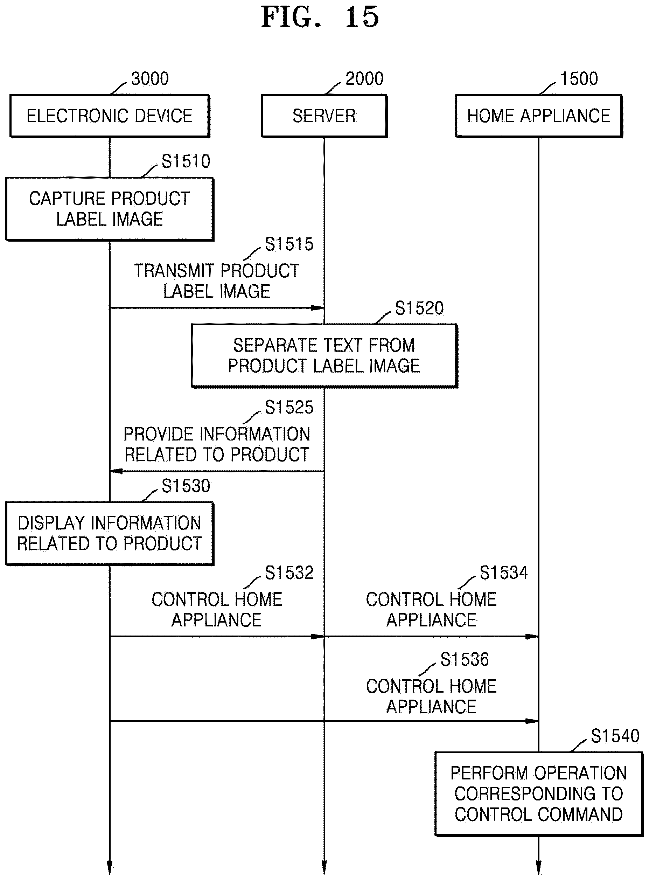

FIG. 15 is a flowchart of an operation method of a server operating in conjunction with a home appliance, according to an embodiment of the disclosure.

Referring to FIG. 15, according to an embodiment of the disclosure, a server 2000 may perform data communication with an electronic device 3000 and a home appliance 1500. The electronic device 3000 may include a smartphone that is the example described above, but is not limited thereto. The home appliance 1500 may include the refrigerator 4000 and the oven 5000, which are the examples described above, but is not limited thereto.

In operation S1510, the electronic device 3000 may capture a product label image. The electronic device 3000 may capture a product label image via camera manipulation by a user. In this case, the product label image may include overlapping texts.

In operation S1515, the electronic device 3000 may transmit the product label image to the server 2000.

In operation S1520, the server 2000 may separate texts from the product label image. The server 2000 may separate and extract overlapping texts from the product label image by using a text separation network. The server 2000 may separate texts by using a first text separation network including a separator, an extractor, and an inpainter. The server 2000 may separate texts by using a second text separation network including a separator and an extractor. The separator may include a first separator using a color clustering algorithm and a second separator including a text separation model that is an Al model. The server 2000 may recognize the separated texts. The server 2000 may generate information related to a product based on the recognized texts. The information related to the product may include, for example, a product name, a weight, a price, a barcode, a product identification number, a manufacturing date, a manufacturer, a distributor, an expiration date, etc., but is not limited thereto.

In operation S1525, the server 2000 may transmit the information related to the product to the electronic device 3000.

In operation S1530, the electronic device 3000 may display the information related to the product. Because an operation in which the electronic device 3000 displays the information related to the product has been described with reference to FIGS. 13B and 14B, descriptions already provided above will be omitted here.

In operations S1532, S1534, and S1536, the electronic device 3000 and/or the server 2000 may control the home appliance 1500. For example, the electronic device 3000 may transmit a home appliance control request to the server 2000 (S1532), and the server 2000 may transmit a home appliance control command to the home appliance 1500 (S1534). Alternatively, the electronic device 2000 may transmit a home appliance control command to the home appliance 1500 (S1536).

In operation S1540, the home appliance 1500 may perform an operation corresponding to the home appliance control command. For example, when the home appliance 1500 is the refrigerator 4000, its temperature may be set according to an operation mode of the refrigerator 4000, and information related to a stored product may be stored in a storage location. For example, when the home appliance 1500 is the oven 5000, settings related to cooking, such as a temperature, etc., may be performed according to an operation mode of the oven 5000.

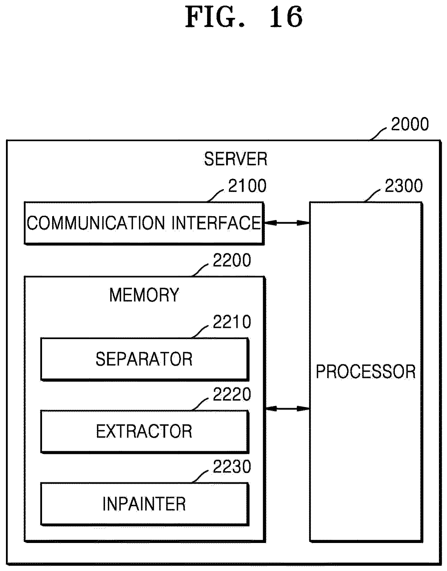

FIG. 16 is a block diagram of a server according to an embodiment of the disclosure.

According to an embodiment of the disclosure, a server 2000 may include a communication interface 2100, a memory 2200, and a processor 2300.

The communication interface 2100 may include communication circuit. The communicator 2100 may include, for example, a communication circuit capable of performing data communication between the server 2000 and other devices by using at least one of data communication methods including wired local area network (LAN), wireless LAN, Wi-Fi, Bluetooth, ZigBee, Wi-Fi Direct (WFD), Infrared Data Association (IrDA), Bluetooth Low Energy (BLE), near field communication (NFC), wireless broadband Internet (WiBro), World Interoperability for Microwave Access (WiMAX), Shared Wireless Access Protocol (SWAP), Wireless Gigabit Alliance (WiGig), and radio frequency (RF) communication.

The communication interface 2100 may transmit and receive data necessary for performing an operation of the server 2000 to and from an external electronic device. For example, the server 2000 may use the communication interface 2100 to receive an image including overlapping texts from an external electronic device (e.g., a user's smartphone, etc.) and transmit information related to a product, which is generated through text separation and recognition, to the external electronic device. Also, the server 2000 may transmit and receive data necessary for controlling a home appliance to and from the home appliance via the communication interface 2100.

The memory 2200 may store instructions, data structures, and program code readable by the processor 2300. The memory 2200 may be configured as one or more memories. In embodiments of the disclosure, operations performed by the processor 2300 may be implemented by executing instructions or code of a program stored in the memory 2200.

The memory 2200 may include non-volatile memories, such as read-only memory (ROM) (e.g., programmable ROM (PROM), erasable PROM (EPROM), electrically erasable PROM (EEPROM)), flash memory (e.g., memory card and solid-state drive (SSD)), and analog recording type memory (e.g., hard disk drive (HDD), magnetic tape, optical disc), and volatile memories, such as random access memory (RAM) (e.g., dynamic RAM (DRAM) and static RAM (SRAM)).

The memory 2200 may store one or more instructions and programs that cause the server 2000 to operate to separate and extract overlapping texts. For example, a separator 2100, an extractor 2220, and an inpainter 2230 may be stored in the memory 2200. As described above in the foregoing figures, a first text separation network may include the separator 2100, the extractor 2200 and the inpainter 2230, and a second text separation network may include the separator 2100 and the extractor 2200. The separator 2100 may include a first separator using a color clustering algorithm and a second separator including a text separation model that is an Al model.

The processor 2300 may control all operations of the server 2000. For example, the processor 2300 may execute one or more instructions of a program stored in the memory 2200 to control all operations of the server 2000 so that the server 2000 separates and recognizes overlapping texts. The processor 2300 may be configured as one or more processors.

The one or more processors 2300 may include at least one of a central processing unit (CPU), a graphics processing unit (GPU), an accelerated processing unit (APU), a many integrated core (MIC), a digital signal processor (DSP), or a neural processing unit (NPU). The one or more processors 2300 may be implemented in the form of an integrated system on a chip (SoC) including one or more electronic components. The one or more processors 2300 may be each implemented as separate hardware (H/W).

The processor 2300 may separate a plurality of text regions within an input image by using the separator 2210. The processor 2300 may determine a text region by determining a character group including characters, based on a word, a sentence, a corpus, or the like. In this case, there may be overlapping texts in the input image. For example, a second text may overlap a first text. The processor 2300 may separate text regions respectively corresponding to all texts included in the input image, thereby obtaining text regions respectively corresponding to the overlapping texts. Because descriptions related to operations of the separator 2210 have already been provided with reference to the foregoing drawings, the descriptions will not be repeated for brevity.

The processor 2300 may extract pixels corresponding to a text in a text region by using the extractor 2220. For example, the processor 2300 may extract, from a first text region including a first text, only pixels corresponding to the first text but not corresponding to a second text overlapping the first text. In this case, when the second text overlapping the first text is removed from the first text region, an image in which a portion of the first text is damaged may be obtained. Because descriptions related to the operations of the extractor 2220 have already been provided with reference to the foregoing drawings, the descriptions will not be repeated for brevity.

The processor 2300 may reconstruct damaged pixels in the image by using the inpainter 2230. The processor 2300 may reconstruct the first text by inpainting an area where the first text overlaps the second text in the first text region by using the inpainter 2230. Because descriptions related to the operations of the inpainter 2230 have already been provided with reference to the foregoing drawings, the descriptions are omitted for brevity.

Moreover, the modules stored in the memory 2200 and executed by the processor 2300 are for convenience of description and are not necessarily limited thereto. Other modules may be added to implement the above-described embodiments of the disclosure, and a module may be subdivided into a plurality of modules distinguished according to its detailed functions, and some of the above-described modules may be combined to form a single module. For example, the separator 2210, the extractor 2220, and the inpainter 2230 may be combined into one and collectively referred to as a first text separation network, and the separator 2210 and the extractor 2220 may be combined into one and collectively referred to as a second text separation network, but the disclosure is not limited thereto.

When a method according to an embodiment of the disclosure includes a plurality of operations, the plurality of operations may be performed by one processor or a plurality of processors. For example, when a first operation, a second operation, and a third operation are performed according to a method of an embodiment of the disclosure, the first operation, the second operation, and the third operation may all be performed by a first processor, and the first operation and the second operation may be performed by the first processor (e.g., a general-purpose processor) while the third operation may be performed by a second processor (e.g., a dedicated Al processor). Here, the dedicated Al processor, which is an example of the second processor, may perform computations for training/inference of Al models. However, embodiments of the disclosure are not limited thereto.

The one or more processors 2300 according to the disclosure may be implemented as a single-core processor or as a multi-core processor.

When a method according to an embodiment of the disclosure includes a plurality of operations, the plurality of operations may be performed by one core or a plurality of cores included in the one or more processors 2300.

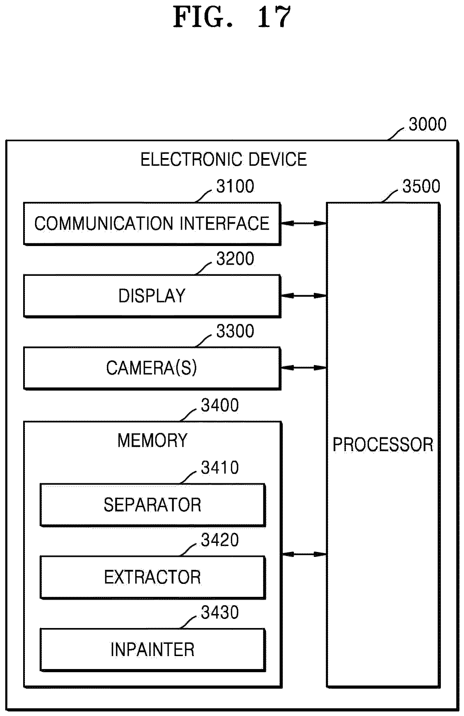

FIG. 17 is a block diagram of an electronic device according to an embodiment of the disclosure.

In an embodiment of the disclosure, the above-described operations of the server 2000 may be performed by an electronic device 3000.

According to an embodiment of the disclosure, the electronic device 3000 may include a communication interface 3100, a display 3200, a camera 3300, a memory 3400, and a processor 3500. Because the communication interface 3100, the memory 3400, and the processor 3500 of the electronic device 3000 respectively correspond to the communication interface 2100, the memory 2200, and the processor 2300 of the server 2000 of FIG. 16, descriptions already provided above with respect to the components are omitted.

The display 3200 may output information processed by the electronic device 3000. Moreover, when the display 3200 and a touch pad form a layer structure to construct a touch screen, the display may be used as an input device as well as an output device. The display 3200 may include at least one of a liquid crystal display (LCD), a thin-film-transistor LCD (TFT LCD), an organic light-emitting diode (OLED) display, a flexible display, a three-dimensional (3D) display, a micro display, or a head-mounted display (HMD). The electronic device 3000 may display, on the display 3200, information related to a product, which is obtained through recognition of a product label.

The camera(s) 3300 may obtain a video and/or an image by capturing an image of an object. The electronic device 3000 may include one or more cameras 3300. The camera(s) 3300 may include, for example, an RGB camera, a telephoto camera, a wide angle camera, an ultra-wide angle camera, etc., but are not limited thereto. The camera(s) 3300 may obtain a video including a plurality of frames. Specific types and detailed functions of the camera(s) 3300 may be clearly inferred by one of ordinary skill in the art, and thus descriptions thereof are omitted.

Although not shown in FIG. 17, the electronic device 3000 may further include an input/output (I/O) interface. The I/O interface may include an input interface for receiving a user's input and an output interface for outputting signals other than image/video signals output from the display 3200.

The input interface is for receiving an input from the user. The input interface may include, but is not limited to, at least one of a keypad, a dome switch, a touch pad (a capacitive overlay type, a resistive overlay type, an infrared beam type, a surface acoustic wave type, an integral strain gauge type, a piezoelectric type, etc.), a jog wheel, or a jog switch.

The output interface may include a speaker. The speaker may output an audio signal received from the communication interface 3100 or stored in the memory 3400.

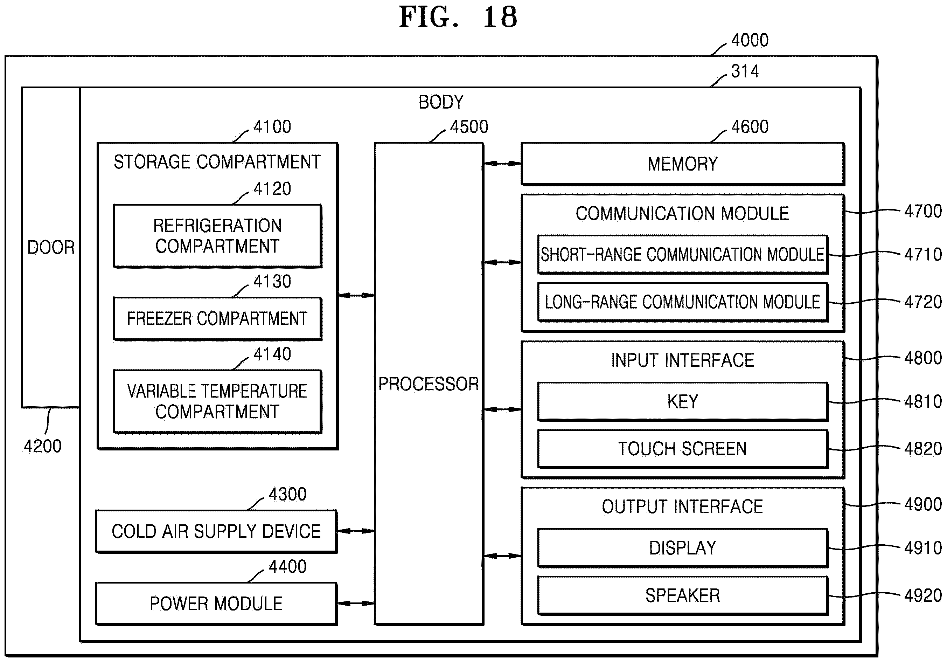

FIG. 18 is a block diagram of a refrigerator according to an embodiment of the disclosure.

A refrigerator 4000 according to an embodiment of the disclosure may include a body 4010, a storage compartment 4100, a door 4200, a cold air supply device 4300, a power module 4400, a processor 4500, a memory 4600, a communication module 4700, an input interface 4800, and an output interface 4900.

The body 4010 may include an inner case, an outer case provided outside the inner case, and a thermal insulation provided between the inner case and the outer case.

The inner case may include at least one of a case, a plate, a panel, or a liner forming the storage compartment 4100. The inner case may be formed as a single body or may be formed by assembling a plurality of plates. The outer case may form an exterior of the body 4010 and may be coupled to an outside of the inner case so that the thermal insulation is provided between the inner case and the outer case.

The thermal insulation may insulate an inside of the storage compartment 4100 and an outside of the storage compartment 4100 so that a temperature inside the storage compartment 4100 may be maintained at a set appropriate temperature without being affected by an environment outside the storage compartment 4100. According to an embodiment of the disclosure, the thermal insulation may include a foam insulation. A foam insulation may be molded by injecting and foaming a urethane foam in which polyurethane and a foaming agent are mixed between the inner case and the outer case.

According to an embodiment of the disclosure, the thermal insulation may include a vacuum insulation in addition to a foam insulation, or may include only the vacuum insulation instead of the foam insulation. The vacuum insulation may include a core material and an outer covering material that accommodates the core material and seals an interior to a vacuum or a pressure close to the vacuum. However, the thermal insulation is not limited to the foam insulation or the vacuum insulation and may include various materials that may be used for insulation.

The storage compartment 4100 may include a space defined by the inner case. The storage compartment 4100 may further include an inner compartment defining the space corresponding to the storage compartment 4100. Various items such as food, medicine, and cosmetics may be stored in the storage compartment 4100, and at least one side of the storage compartment 4100 may be opened to put in or take out the items.

The refrigerator 4000 may include one or more storage compartments 4100. When two or more storage compartments 4100 are provided in the refrigerator 4000, each of the storage compartments 4100 may have a different purpose and may be maintained at a different temperature. To this end, the storage compartments 4100 may be separated from each other by a partition wall including an insulation material.

The storage compartment 4100 may be provided to be maintained in an appropriate temperature range depending on its use, and include a refrigeration compartment 4120, a freezer compartment 4130, or a variable temperature compartment 4140 differentiated according to their use and/or temperature range. The refrigeration compartment 4120 may be maintained at a temperature suitable for refrigerating items, and the freezer compartment 4130 may be maintained at a temperature suitable for freezing items. Refrigeration may mean cooling an item without freezing the item, and for example, the refrigeration compartment 4120 may be maintained in a range between 0 °C and 7 °C. Freezing may mean freezing an item or cooling the item so that it remains frozen, and for example, the freezer compartment 4130 may be maintained in a range between - 20 °C and -1 °C. The variable temperature compartment 4140 may be used as either the refrigeration compartment 4120 or the freezer compartment 4130 based on or regardless of a user's selection.

The storage compartment 4100 may be referred to as various names, such as a vegetable compartment, a fresh compartment, a cooling compartment, and an ice-making compartment in addition to names such as the refrigeration compartment 4120, the freezer compartment 4130, and the variable temperature compartment 4140, and as used herein, the terms such as the refrigeration compartment 4120, the freezer compartment 4130, and the variable temperature compartment 4140 should be understood to each encompass the storage compartment 4100 having a corresponding use and temperature range.

According to an embodiment of the disclosure, the refrigerator 4000 may include at least one door 4200 configured to open and close one open side of the storage compartment 4100. The at least one door 4200 may be provided to open and close each of one or more storage compartments 4100, or one door 4200 may be provided to open and close a plurality of storage compartments 4100. The door 4200 may be rotatably or slidably installed on a front surface of the body 4010.

The door 4200 may be configured to seal the storage compartment 4100 when the door 4200 is closed. The door 4200 may include an insulation material like in the body 4010 to insulate the storage compartment 4100 when the door 4200 is closed.

According to an embodiment of the disclosure, the door 4200 may include a door outer panel forming a front surface of the door 4200, a door inner panel forming a rear surface of the door 4200 and facing the storage compartment 4100, an upper cap, a lower cap, and a door insulation material provided therein.

A gasket may be provided at edges of the door inner panel. and seals the storage compartment 4100 by closely contacting the front surface of the body 4010 when the door 4200 is closed. The door inner panel may include a dyke protruding backward to mount a door basket capable of storing items.

According to an embodiment of the disclosure, the door 4200 may include a door body and a front panel detachably coupled to a front side of the door body and forming the front surface of the door 4200. The door body may include a door output panel forming a front surface of the door body, a door inner panel forming a rear surface of the door body and facing the storage compartment 4100, an upper cap, a lower cap, and a door insulation material provided therein.

The refrigerator 4000 may be classified as a French door type, a side-by-side type, a bottom mounted freezer (BMF) refrigerator, a top mounted freezer (TMF) refrigerator, a one-door refrigerator, or the like according to arrangement of the door 4200 and the storage compartment 4100.

According to an embodiment of the disclosure, the refrigerator 4000 may include a cold air supply device 4300 provided to supply cold air to the storage compartment 4100.

The cold air supply device 4300 may include a machine, a device, an electronic device, and/or a system that is a combination thereof that are capable of producing cold air and guiding the cold air to cool the storage compartment 4100.

According to an embodiment of the disclosure, the cold air supply device 4300 may produce cold air through a refrigeration cycle including compression, condensation, expansion, and evaporation of a refrigerant. To this end, the cold air supply device 4300 may include a refrigeration cycle system having a compressor, a condenser, an expansion device, and an evaporator capable of driving a refrigeration cycle. According to an embodiment of the disclosure, the cold air supply device 4300 may include a semiconductor such as a thermoelectric element. The thermoelectric element may cool the storage compartment 4100 by heating and cooling using the Peltier effect.

According to an embodiment of the disclosure, the refrigerator 4000 may include a machine compartment in which at least some components belonging to the cold air supply device 4300 are arranged.

The machine compartment may be separated and insulated from the storage compartment 4100 to prevent heat generated in components arranged in the machine compartment from being transferred to the storage compartment 4100. The inside of the machine compartment may be configured to communicate with the outside of the body 4010 so as to dissipate heat from components inside the machine compartment.

According to an embodiment of the disclosure, the refrigerator 4000 may include a dispenser mounted in the door 4200 to provide water and/or ice. The dispenser may be provided in the door 4200 so that the user is able to access it without opening the door 4200.

According to an embodiment of the disclosure, the refrigerator 4000 may include an ice maker provided to produce ice. The ice maker may include an ice tray for storing water, an ice breaker for separating ice from the ice tray, and an ice bucket for storing ice produced in the ice tray.

According to an embodiment of the disclosure, the refrigerator 4000 may include a controller for controlling the refrigerator 4000.

The controller may include a memory 4600 for storing or recording programs and/or data for controlling the refrigerator 4000 and a processor 4500 configured to output control signals for controlling the cold air supply device 4300 and the like according to the programs and/or data recorded in the memory 4600.

The memory 4600 stores or records various pieces of information, data, instructions, programs, etc. necessary for the operation of the refrigerator 4000. The memory 4600 may store temporary data generated while generating control signals for controlling components included in the refrigerator 4000. The memory 4600 may include at least one of volatile memory or non-volatile memory, or a combination thereof.

The processor 4500 controls all operations of the refrigerator 4000. The processor 4500 may execute a program stored in the memory 4600 to control components of the refrigerator 4000. The processor 4500 may include a separate NPU that performs an operation of an Al model. The processor 4500 may also include a CPU, a dedicated graphics processor (GPU), etc. The processor 4500 may generate a control signal for controlling an operation of the cool air supply device 4300. For example, the processor 4500 may receive temperature information of the storage compartment 4100 from a temperature sensor and generate a cooling control signal for controlling the operation of the cold air supply device 4300 based on the temperature information of the storage compartment 4100.

Also, the processor 4500 may process a user input received from a user interface and control an operation of the user interface according to programs and/or data recorded/stored in the memory 4600. The user interface may be provided using the input interface 4800 and the output interface 4900. The processor 4500 may receive a user input from the user interface. The processor 4500 may also transmit, to the user interface, a display control signal and image data for displaying an image on the user interface in response to a user input.

The processor 4500 may be provided integrally with or separately from the memory 4600. The processor 4500 may include one or more processors. For example, the processor 4500 may include a main processor and at least one sub-processor. The memory 4600 may include one or more memories.

According to an embodiment of the disclosure, the refrigerator 4000 may include the memory 4600 and the processor 4500 for controlling all components included in the refrigerator 4000 and the memory 4600, or include a plurality of memories 4600 and a plurality of processors 4500 for individually controlling the components of the refrigerator 4000. For example, the refrigerator 4000 may include the memory 4600 and the processor 4500 for controlling the operation of the cold air supply device 4300 according to an output of the temperature sensor. In addition, the refrigerator 4000 may separately include the memory 4600 and the processor 4500 for controlling operation of the user interface according to a user input.

The communication module 4700 may communicate with an external device such as a server, a mobile device, or another home appliance via a nearby access point (AP). The AP may connect a LAN to which the refrigerator 4000 or a user device is connected to a wide area network (WAN) to which a server is connected. The refrigerator 4000 or user device may be connected to a server via a WAN.

The input interface 4800 may include a key 4810, a touch screen 4820, a microphone, etc. The input interface 4800 may receive a user input and transmit the user input to the processor 4500.

The output interface 4900 may include a display 4910, a speaker 4920, etc. The output interface 4900 may output various notifications, messages, information, etc., generated by the processor 4500.

In an embodiment of the disclosure, the refrigerator 4000 may perform data communication with the server 2000 and/or the electronic device 3000. The refrigerator 4000 may receive data related to a control operation (e.g., operation mode setting) from the server 2000 and/or the electronic device 3000, and execute a function corresponding to the received data in the refrigerator 4000. Because descriptions regarding the refrigerator 4000 being controlled by the server 2000 and/or the electronic device 3000 have been provided above, the descriptions will not be repeated.

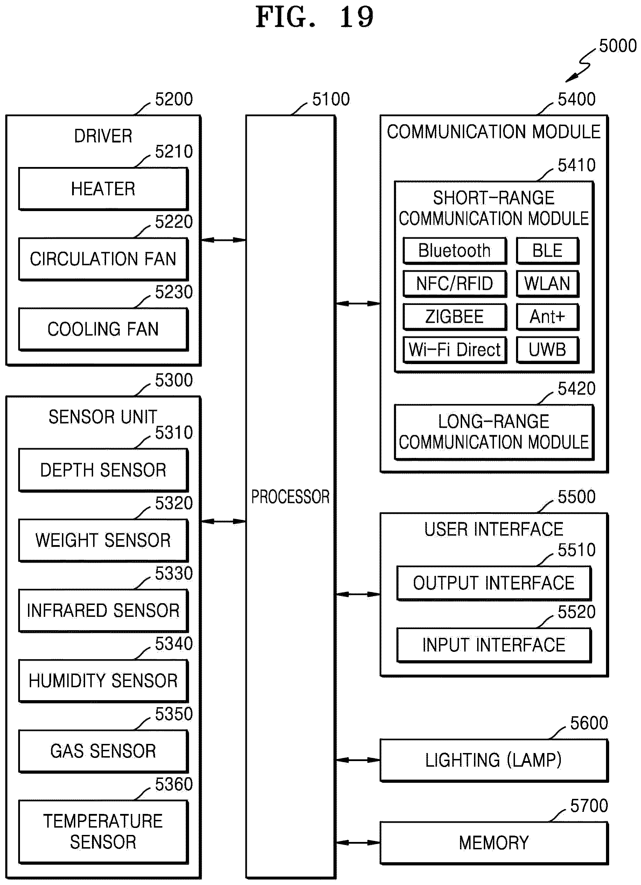

FIG. 19 is a block diagram of an oven according to an embodiment of the disclosure.

An oven 5000 according to an embodiment of the disclosure may include a processor 5100, a driver 5200, a sensor unit 5300, a communication module 5400, a user interface 5500, lighting (lamp) 5600, and a memory 5700.

The processor 5100 may control all operations of the oven 5000. The processor 5100 may execute programs stored in the memory 5700 to control the driver 5200, the sensor unit 5300, the communication module 5400, the user interface 5500, the lighting 5600, and the memory 5700.

In an embodiment of the disclosure, the oven 5000 may be a smart oven equipped with an artificial intelligence (AI) processor. The Al processor may be manufactured in the form of a dedicated hardware chip for Al, or it may be manufactured as a part of an existing general-purpose processor (e.g., a CPU or an application processor (AP)) or a dedicated graphics processor (e.g., a GPU) and mounted in the oven 5000.

The memory 5700 may store programs necessary for processing and control performed by the processor 5100 and pieces of input/output data (e.g., recipe information, area tables, spacing tables, size information for cropped areas, distortion correction values, brightness level tables, etc.). The memory 5700 may store an Al model. For example, the memory 5700 may store an Al model for object recognition, an Al model for recipe recommendation, etc.

The memory 5700 may include at least one type of storage medium, i.e., at least one of a flash memory-type memory, a hard disk-type memory, a multimedia card micro-type memory, a card-type memory (e.g., an SD card or an XD memory), RAM, SRAM, ROM, EEPROM, PROM, a magnetic memory, a magnetic disc, or an optical disc. In addition, the oven 5000 may interwork with a web storage or cloud server that performs a storage function on the Internet.

The driver 5200 may include a heater 5210, a circulation fan 132, and a cooling fan 5230, but is not limited thereto. The driver 5200 may be changed according to a type of the oven 5000.

The heater 5210 for heating food may be provided in an inner space (e.g., a cooking compartment) of the oven 5000. The heater 5210 may be an electric heater including an electric resistor or a gas heater that generates heat by burning gas.

A circulation fan 5220 for evenly heating food by circulating internal air and a circulation motor for driving the circulation fan 5220 may be provided at the rear of the inner space (the cooking compartment). In addition, a fan cover covering the circulation fan 5220 may be provided in front of the circulation fan 5220, and has a through hole formed therein to allow air to flow.

The cooling fan 5230 may be a centrifugal fan that sucks in air from the top and discharges it in a radial direction. The cooling fan 5230 may be provided in a cooling passage. The cooling fan 5230 may include a flat rotating plate, a hub provided at a center of the rotating plate and coupled to a rotation shaft of a cooling motor, and a plurality of wings arranged from the center of the rotating plate to an edge portion thereof. The hub may be formed in a conical shape with a radius increasing toward a bottom, thus diffusing air sucked in from the top in a downward direction.

The sensor unit 5300 may include, but is not limited to, a depth sensor 5310, a weight sensor 5320, an infrared sensor 5330, a humidity sensor 5340 for sensing humidity of an inner space, a gas sensor 5350 for sensing the level of gas in the inner space, and a temperature sensor 5360. Because one of ordinary skill in the art may intuitively infer a function of each sensor from its name, a detailed description thereof will be omitted.

The communication module 5400 may include one or more components that enable communication between the oven 5000 and a server apparatus (not shown) or between the oven 5000 and a mobile terminal (not shown). For example, the communication module 5400 may include a short-range communication module 5410, a long-range communication module 5420, etc.

The short-range communication module 5410 may include, but is not limited to, a communication module using communication technologies such as Bluetooth, BLE, NFC, WLAN (Wi-Fi), ZigBee, IrDA, WFD, ultra- wideband (UWB), Ant+, etc. The long-range communication module 5420 may be used to communicate with the server 2000 when the oven 5000 is remotely controlled by a server apparatus (not shown) in an Internet of Things (IoT) environment. The long-range communication module 5420 may include the Internet, a computer network (e.g., a LAN or a WAN), and a mobile communication module. The mobile communication module may include, but is not limited to, a third-generation (3G) module, a fourth-generation (4G) module, a fifth-generation (5G) module, a long-term evolution (LTE) module, a narrowband loT (NB-loT) module, an LTE machine (LTE-M) module, etc.

The user interface 5500 may include an input interface 5510 and an output interface 5520. The output interface 5510 is for outputting a video signal or an audio signal, and may include a display, an audio output interface, etc.

When the display and a touch pad form a layer structure to construct a touch screen, the display may serve as the input interface 5520 as well as the output interface 5510. The display may include at least one of an LCD, a TFT LCD, an LED display, an OLED display, a flexible display, a 3D display, or an electrophoretic display. Also, the oven 5000 may include two or more displays according to its implemented configuration.

The audio output interface may output audio data received via the communication module 5400 or stored in the memory 5700. The audio output interface may also output sound signals related to functions performed by the oven 5000. The audio output interface may include a speaker, a buzzer, and the like.

According to an embodiment of the disclosure, the display may output a monitoring image of the inner space of the oven 5000, or output recipe information suitable for ingredients. Also, the display may output a correction value for a cooking temperature determined according to a height at which a tray is inserted.

The input interface 5520 is for receiving an input from the user. The input interface 5520 may be at least one of a keypad, a dome switch, a touch pad (a capacitive overlay type, a resistive overlay type, an infrared beam type, a surface acoustic wave type, an integral strain gauge type, a piezoelectric type, etc.), a jog wheel, or a jog switch, but is not limited thereto.

The input interface 5520 may include a speech recognition module. For example, the oven 5000 may receive a speech signal, which is an analog signal, via a microphone, and convert a part of speech into a computer-readable text by using an automatic speech recognition (ASR) model. The oven 5000 may obtain an intent in a user's utterance by interpreting the text using a natural language understanding (NLU) model. Here, the ASR model or NLU model may be an Al model. An Al model may be processed by a dedicated Al processor designed with a hardware structure specialized for processing an Al model.

The lighting 5600 may be provided on one side of the inner space of the oven 5000 and may be referred to as internal lighting. For example, the lighting 5600 may be disposed on the ceiling or on a side surface, but is not limited thereto. The lighting 5600 may be turned on when the door of the oven 5000 is opened or the oven 5000 operates. The lighting 5600 may be protected by a glass cover.

According to an embodiment of the disclosure, the lighting 5600 may have various brightness levels. For example, the lighting 5600 may emit light ranging from a low brightness level to a high brightness level. The brightness of the lighting 5600 may be controlled by the processor 5100. The lighting 5600 may be halogen lighting or LED lighting, but is not limited thereto.

In an embodiment of the disclosure, the oven 5000 may perform data communication with the server 2000 and/or the electronic device 3000. The oven 5000 may receive data related to a control operation (e.g., operation mode setting) from the server 2000 and/or the electronic device 3000, and execute a function corresponding to the received data in the oven 5000. Because descriptions regarding the oven 5000 being controlled by the server 2000 and/or the electronic device 3000 have been provided above, the descriptions will not be repeated.

The disclosure presents a method of obtaining an image including a complete text by determining a text region to separate an overlapping text from an image including overlapping texts, extracting only pixels corresponding to a character group from the text region, and then reconstructing the overlapping text, and a method of generating information by recognizing the reconstructed text.

The technical solutions to be achieved in the disclosure are not limited to those described above, and other technical solutions not described will be clearly understood by one of ordinary skill in the art from the following description.

According to an aspect of the disclosure, a method, performed by a server, of obtaining a text from an image may be provided. The method may include obtaining an image including a first text and a second text overlapping the first text. The method may include separating a first text region corresponding to the first text from the image. The method may include extracting pixels corresponding to the first text from the first text region to obtain (a non-overlapping portion where the first text does not overlap any other text or characteristics) and a damaged portion (e.g., an overlapping portion where the first text overlaps the second text) of the first text. The method may include reconstructing the first text by inpainting the damaged portion of the first text in which the first text overlaps the second text in the image.

The separating of the first text region may include determining a plurality of text regions by segmenting the first text and the second text in the image into a plurality of character groups.

The separating of the text region may include separating the first text region from among the plurality of text regions.

The determining of the plurality of text regions may include determining the plurality of text regions by applying a color clustering algorithm to the image to group characters of adjacent colors in a color space.

The determining of the plurality of text regions may include receiving a user input for selecting the first text in the image.

The determining of the plurality of text regions may include applying the color clustering algorithm to the first text region corresponding to the user input in the image.

The determining of the plurality of text regions may include obtaining, based on the image, a text region map indicating locations of the first text and the second text in the image.

The determining of the plurality of text regions may include determining the plurality of text regions based on the text region map.

The determining of the plurality of text regions may include applying the color clustering algorithm based on the text region map.

The determining of the plurality of text regions may include determining the plurality of text regions based on at least one of a language, a font, a format, a corpus, or a logo of each of the first text and the second text.

The method may include applying OCR to the first text.

The image may include a label image related to food.

The first text may include a text related to the food.

The method may include providing information related to the food based on a result of applying the OCR to the first text.

The method may include transmitting the information related to the food to an external device.

According to an aspect of the disclosure, a server for obtaining text from an image may be provided. The server may include a communication interface, a memory storing one or more instructions, and one or more processors configured to execute the one or more instructions stored in the memory.

The one or more processors may execute the one or more instructions to obtain an image including a first text and a second text overlapping the first text. The one or more processors may execute the one or more instructions to separate a first text region corresponding to the first text from the image. The one or more processors may execute the one or more instructions to extract pixels corresponding the first text region to obtain an undamaged portion and a damaged portion of the first text. The one or more processors may execute the one or more instructions to reconstruct the first text by inpainting the damaged portion the first text in which the first text overlaps the second text in the image.

The one or more processors may execute the one or more instructions to determine a plurality of text regions by segmenting the first text and the second text in the image into a plurality of character groups.

The one or more processors may execute the one or more instructions to separate the first text region from among the plurality of text regions.

The one or more processors may execute the one or more instructions to determine the plurality of text regions by applying a color clustering algorithm to the image to group characters of adjacent colors in a color space.

The one or more processors may execute the one or more instructions to receive a user input for selecting the first text in the image.

The one or more processors may execute the one or more instructions to apply the color clustering algorithm to the first text region corresponding to the user input in the image.

The one or more processors may execute the one or more instructions to obtain, based on the image, a text region map indicating locations of the first text and the second text in the image.

The one or more processors may execute the one or more instructions to determine the plurality of text regions based on the text region map.

The one or more processors may execute the one or more instructions to apply the color clustering algorithm based on the text region map.

The one or more processors may execute the one or more instructions to determine the plurality of text regions, based on at least one of a language, a font, a format, a corpus, or a logo of each of the first text and the second text.

The one or more processors may execute the one or more instructions to apply OCR to the first text.

The image may include a label image related to food.

The first text may include a text related to the food.

The one or more processors may execute the one or more instructions to provide information related to the food based on a result of applying the OCR to the first text.

Moreover, embodiments of the disclosure may also be implemented in the form of recording media including instructions executable by a computer, such as a program module executed by the computer. The computer-readable recording media may be any available media that are accessible by a computer and include both volatile and nonvolatile media and both removable and non-removable media. Furthermore, the computer-readable recording media may include both computer storage media and communication media. The computer storage media include both volatile and nonvolatile, removable and non-removable media implemented using any method or technology for storage of information such as computer-readable instructions, data structures, program modules, or other data. The communication media typically embody computer-readable instructions, data structures, program modules, or other data in a modulated data signal.

A computer-readable storage medium may be provided in the form of a non-transitory storage medium. In this regard, the term 'non-transitory storage medium' only means that the storage medium does not include a signal (e.g., an electromagnetic wave) and is a tangible device, and the term does not differentiate between where data is semi-permanently stored in the storage medium and where the data is temporarily stored in the storage medium. For example, the 'non-transitory storage medium' may include a buffer for temporarily storing data.

According to an embodiment of the disclosure, methods according to the embodiments of the disclosure may be included in a computer program product when provided. The computer program product may be traded, as a product, between a seller and a buyer. The computer program product may be distributed in the form of a computer-readable storage medium (e.g., CD-ROM) or distributed (e.g., downloaded or uploaded) on-line via an application store or directly between two user devices (e.g., smartphones). For online distribution, at least a part of the computer program product (e.g., a downloadable app) may be at least transiently stored or temporally generated in the computer-readable storage medium such as a memory of a server of a manufacturer, a server of an application store, or a relay server.

The above description of the disclosure is provided for illustration, and it will be understood by those of ordinary skill in the art that changes in form and details may be readily made therein without departing from technical idea or essential features of the disclosure. Accordingly, the above embodiments of the disclosure and all aspects thereof are merely examples and are not limiting. For example, each component defined as an integrated component may be implemented in a distributed fashion, and likewise, components defined as separate components may be implemented in an integrated form.

The scope of the disclosure is defined not by the detailed description thereof but by the following claims, and all the changes or modifications within the meaning and scope of the appended claims and their equivalents will be construed as being included in the scope of the disclosure.

## Claims

1. A method performed by a server, of obtaining a text from an image, the method comprising:
obtaining an image including a first text and a second text overlapping the first text;
separating a first text region corresponding to the first text from the image;
extracting pixels corresponding to the first text from the first text region to obtain an undamaged portion and a damaged portion of the first text; and
reconstructing the first text by inpainting the damaged portion of the first text in which the first text overlaps the second text in the image.

2. The method of claim 1, wherein
the separating of the first text region comprises:
determining a plurality of text regions by segmenting the first text and the second text in the image into a plurality of character groups; and
separating the first text region from among the plurality of text regions.

3. The method of claim 2, wherein the determining of the plurality of text regions comprises determining the plurality of text regions by applying a color clustering algorithm to the image to group characters of adjacent colors in a color space.

4. The method of claim 3, wherein
the determining of the plurality of text regions comprises:
receiving a user input for selecting the first text in the image; and
applying the color clustering algorithm to the first text region corresponding to the user input in the image.

5. The method of claim 3, wherein
the determining of the plurality of text regions comprises:
obtaining, based on the image, a text region map indicating locations of the first text and the second text in the image; and
determining the plurality of text regions based on the text region map.

6. The method of any of claims 2 to 5, wherein the determining of the plurality of text regions comprises determining the plurality of text regions based on at least one of a language, a font, a format, a corpus, or a logo of each of the first text and the second text.

7. The method of any of claims 1 to 6, wherein
the image comprises a label image related to food,
the first text comprises a text related to the food, and
the method further comprises
providing information related to the food, based on a result of applying the OCR to the first text.

8. A server for obtaining a text from an image, the server comprising:
a memory storing one or more instructions; and
one or more processors configured to execute the one or more instructions stored in the memory to
obtain an image including a first text and a second text overlapping the first text,
separate a first text region corresponding to the first text from the image,
extract pixels corresponding the first text region to obtain an undamaged portion and a damaged portion of the first text, and
reconstruct the first text by inpainting the damaged portion of the first text in which the first text overlaps the second text in the image.

9. The server of claim 8, wherein
one or more processors is further configured to execute the one or more instructions to determine a plurality of text regions by segmenting the first text and the second text in the image into a plurality of character groups, and
separate the first text region from among the plurality of text regions.

10. The server of claim 9, wherein the one or more processors is further configured to execute the one or more instructions to determine the plurality of text regions by applying a color clustering algorithm to the image to group characters of adjacent colors in a color space.

11. The server of claim 10, wherein
the one or more processors is further configured to execute the one or more instructions to receive a user input for selecting the first text in the image, and
apply the color clustering algorithm to the first text region corresponding to the user input in the image.

12. The server of claim 10, wherein
the one or more processors is further configured to execute the one or more instructions to
obtain, based on the image, a text region map indicating locations of the first text and the second text in the image, and
determine the plurality of text regions based on the text region map.

13. The server of any of claims 9 to 12, wherein the one or more processors is further configured to execute the one or more instructions to determine the plurality of text regions based on at least one of a language, a font, a format, a corpus, or a logo of each of the first text and the second text.

14. The server of any of claims 8 to 13, wherein
the image comprises a label image related to food
the first text comprises a text related to the food, and
the one or more processors is further configured to execute the one or more instructions to provide information related to the food, based on a result of applying the OCR to the first text.

15. A computer-readable recording medium having recorded thereon a program for executing the method of any of claims 1 to 7, on a computer.
